(19) **Europäisches Patentamt / European Patent Office / Office européen des brevets**

(11) **EP 4 752 861 A1**

(12) # EUROPEAN PATENT APPLICATION
published in accordance with Art. 153(4) EPC

(43) Date of publication:
**03.06.2026 Bulletin 2026/23**

(21) Application number: **24845378.9**

(22) Date of filing: **09.07.2024**

(51) International Patent Classification (IPC):
*G08G 1/00* (2006.01)  *G05D 1/00* (2024.01)
*G08G 1/09* (2006.01)  *H04Q 9/00* (2006.01)

(52) Cooperative Patent Classification (CPC):
**G05D 1/2249; G05D 1/00; G08G 1/00; G08G 1/09;
H04Q 9/00;** G05D 2105/22; G05D 2107/13;
G05D 2109/10

(86) International application number:
**PCT/JP2024/024709**

(87) International publication number:
**WO 2025/022997 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2023 JP 2023119708**

(71) Applicant: **Sony Group Corporation
Tokyo 108-0075 (JP)**

(72) Inventors:
• **ITO Maho
Tokyo 108-0075 (JP)**

• **TOMONAGA Seishi
Tokyo 108-0075 (JP)**
• **UCHIDA Tetsuhiro
Tokyo 108-0075 (JP)**
• **TAKAMATSU Takashi
Tokyo 108-0075 (JP)**
• **TAKAYAMA Yuya
Tokyo 108-0075 (JP)**
• **YOSHITOMI Kosuke
Tokyo 108-0075 (JP)**
• **KAGOYA Tsuyoshi
Tokyo 108-0075 (JP)**

(74) Representative: **Witte, Weller & Partner
Patentanwälte mbB
Postfach 10 54 62
70047 Stuttgart (DE)**

(54) **SIGNAL PROCESSING DEVICE, SIGNAL PROCESSING METHOD, AND SIGNAL PROCESSING SYSTEM**

(57)  The present disclosure relates to a signal processing device, a signal processing method, and a signal processing system that can improve the operability and safety of the remote operation. The current positions of a mobile body and a surrounding object located in a region around the mobile body considering communication delay time are predicted based on the position information, speed, and steering angle of the mobile body and information on the surrounding object, which are received through a communication with the mobile body, and a display image displaying a prediction result is created and displayed by switching the display method in accordance with the delay time. It is applicable to remote operation systems.

Fig.7

EP 4 752 861 A1

# EP 4 752 861 A1

**Description**

Technical Field

The present disclosure relates to a signal processing device, a signal processing method, and a signal processing system, and particularly relates to a signal processing device, a signal processing method, and a signal processing system that can achieve safe remote operation by appropriately displaying vehicle surroundings information transmitted from the vehicle in consideration of the communication delay time when the vehicle is operated from a remote place.

Background Art

Development of autonomous driving technologies for mobile bodies such as vehicles, ships, and aircraft is underway, and in the near future, mobile bodies capable of fully autonomous driving without the need for a driver are expected to be realized.

However, it is expected that remote operation in which a mobile body is operated from a remote location will become widespread prior to the realization of fully autonomous driving.

For example, when remotely operating a vehicle as a mobile body, the own vehicle position is sensed at the vehicle, and the information on the own vehicle position as a sensing result is transmitted to an operation terminal operated by an operator at a remote place.

At the operation terminal, the own vehicle position transmitted from the vehicle is received and presented, and based on the presented information on the own vehicle position, steering information is input by the operator, and the steering information is transmitted to the vehicle.

Then, at the vehicle, the steering information transmitted from the operation terminal is received, and the vehicle travels based on the received steering information, thereby realizing remote operation.

It is known that a delay occurs in the communication between the operation terminal and the vehicle to be operated.

Therefore, when the own vehicle position of the vehicle is received at the operation terminal, the vehicle has moved by the amount of the delay time, and thus the own vehicle position information presented to the operator represents position information of a past position lagged by the amount of the delay time, which may lead to a decrease in operability.

In view of this, a technique has been proposed in which the current position of the vehicle to be operated is estimated, in consideration of the movement during the delay time, from the own vehicle position information of the vehicle up until just before and the communication delay time, and is displayed in a superimposed manner on the own vehicle position information transmitted thereto (see PTL 1).

Citation List

Patent Literature

PTL 1: JP2010-061346A

Summary

Technical Problem

However, although it is possible to estimate and present the own vehicle position of the vehicle considering the delay time, the positions of surrounding vehicles and pedestrians around the vehicle to be operated are not presented in consideration of the delay time, which may lead to misrecognition of the positions of surrounding vehicles and pedestrians and result in a collision.

In view of the above-described circumstances, an object of the present disclosure is particularly to appropriately present the position information of vehicles and surrounding objects transmitted from the vehicle in consideration of communication delay time when the vehicle is operated from a remote place.

Solution to Problem

A signal processing device and a signal processing system according to an aspect of the present disclosure include a prediction unit configured to predict a current position of a surrounding object considering a delay time of a communication with a mobile body based on information on the surrounding object received through the communication,

2

the surrounding object being an object that is present in a region around the mobile body.

A signal processing method according to an aspect of the present disclosure includes predicting a current position of a surrounding object considering a delay time of a communication with a mobile body based on information on the surrounding object received through the communication, the surrounding object being an object that is present in a region around the mobile body.

According to an aspect of the present disclosure, a current position of a surrounding object considering a delay time of a communication with a mobile body is predicted based on information on the surrounding object received through the communication, the surrounding object being an object that is present in a region around the mobile body.

Brief Description of Drawings

[Fig. 1]

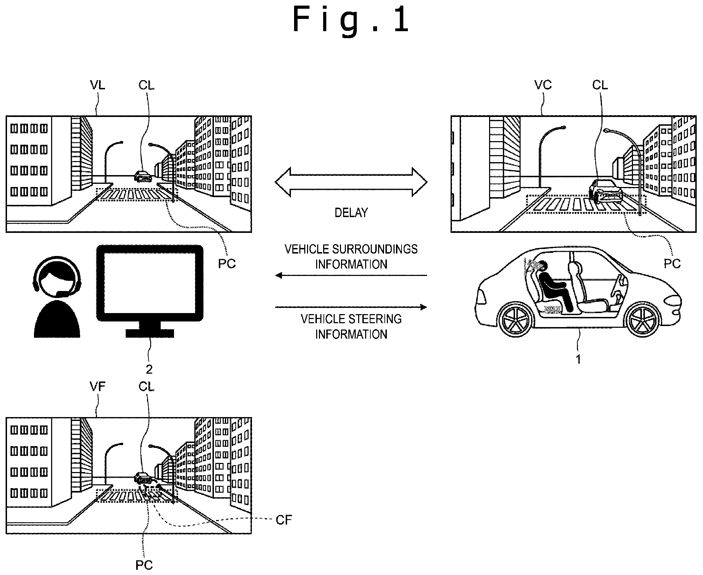

Fig. 1 is a diagram illustrating an overview of the present disclosure.
[Fig. 2]

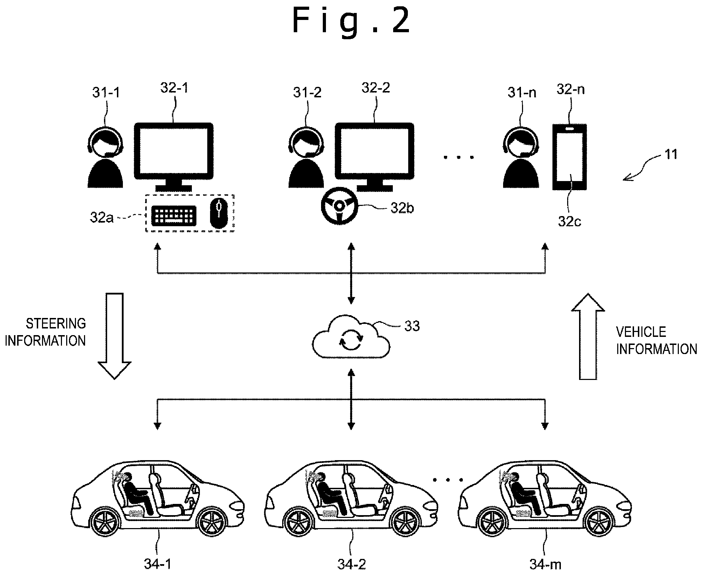

Fig. 2 is a diagram illustrating a configuration example of a remote operation system of a first embodiment of the present disclosure.
[Fig. 3]

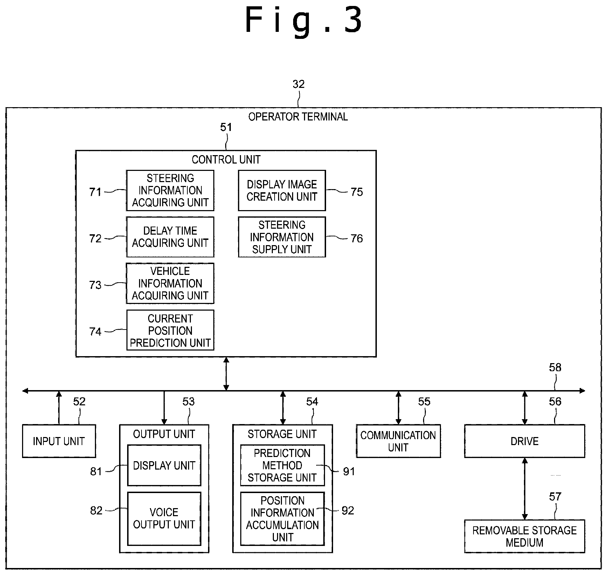

Fig. 3 is a diagram illustrating a configuration example of an operator terminal of Fig. 2.
[Fig. 4]

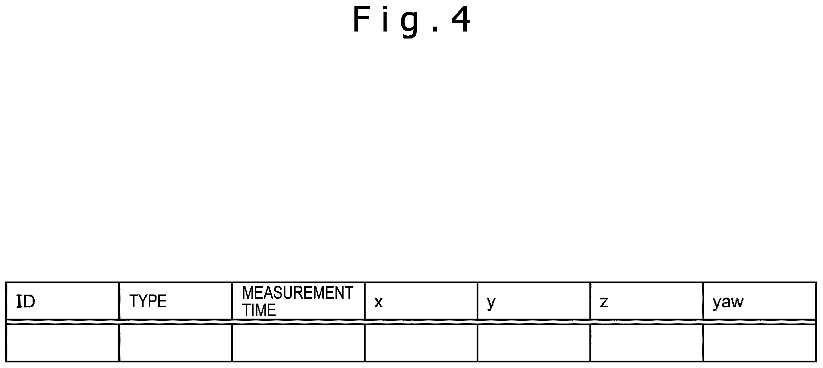

Fig. 4 is a diagram illustrating position information of a vehicle.
[Fig. 5]

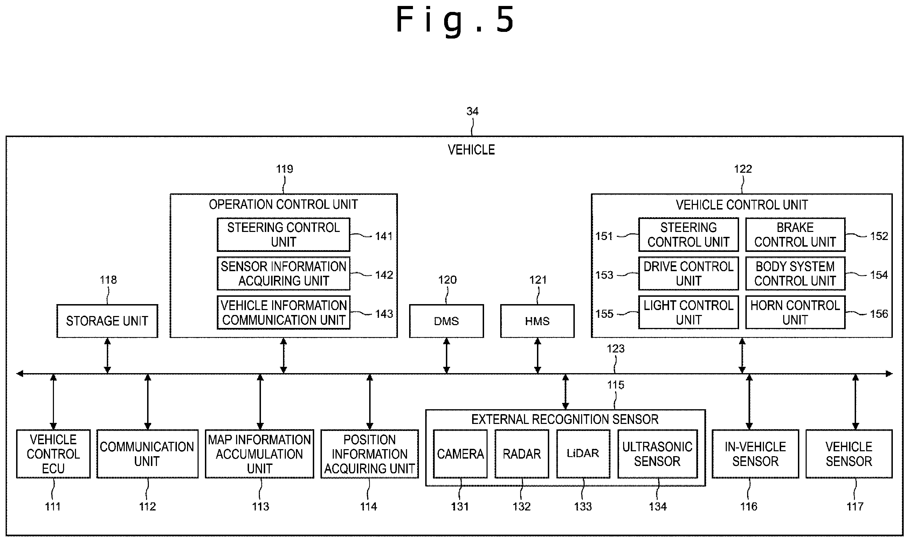

Fig. 5 is a diagram illustrating a configuration example of the vehicle of Fig. 2.
[Fig. 6]

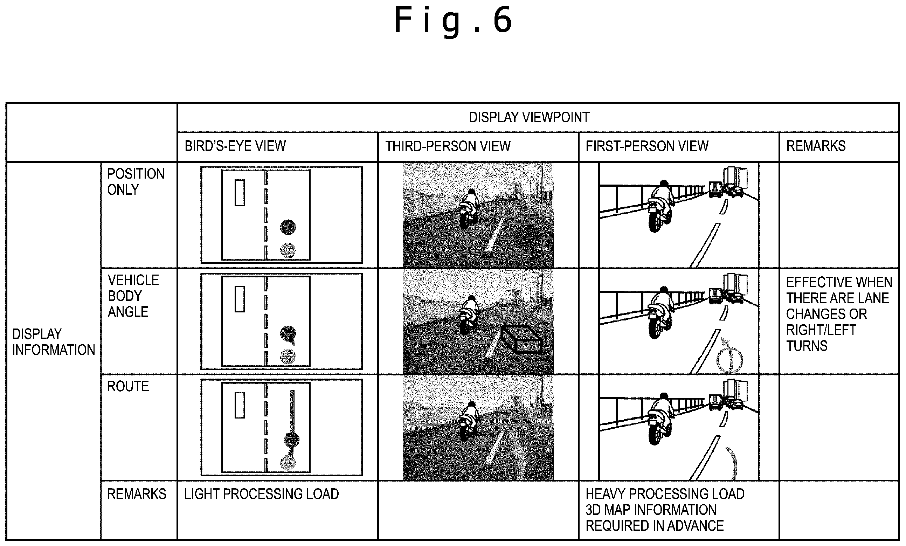

Fig. 6 is a diagram illustrating a display method for an own vehicle.
[Fig. 7]

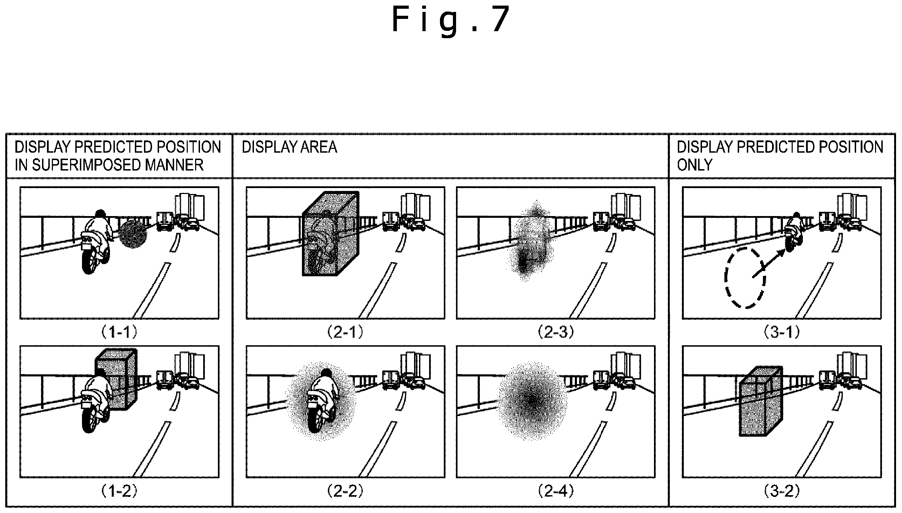

Fig. 7 is a diagram illustrating a display method for a surrounding vehicle.
[Fig. 8]

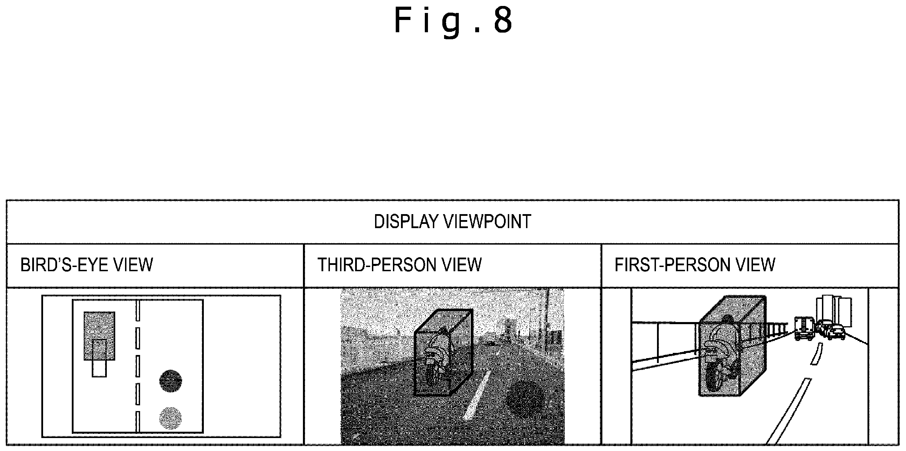

Fig. 8 is a diagram illustrating a display method for the surrounding vehicle of each display method for the own vehicle.
[Fig. 9]

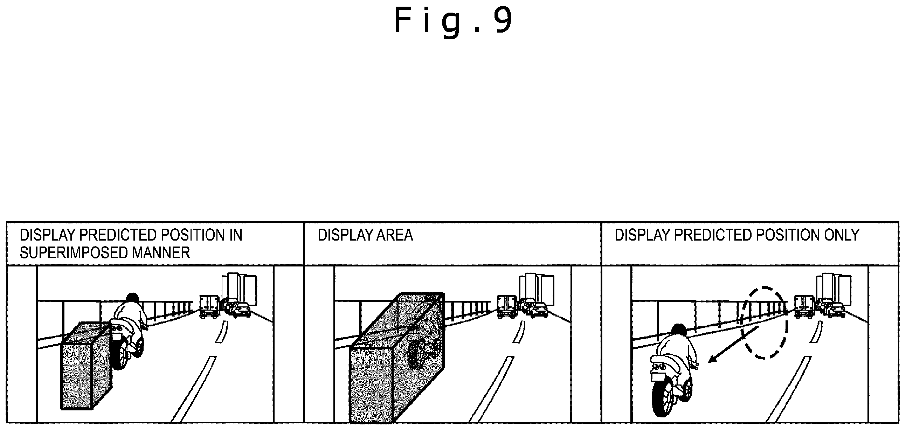

Fig. 9 is a diagram illustrating a display method with which deceleration of a surrounding vehicle can be recognized.
[Fig. 10]

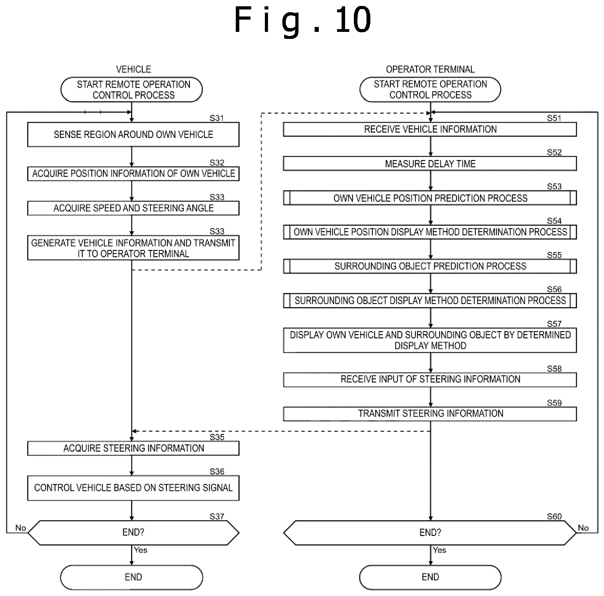

Fig. 10 is a flowchart for describing a remote operation control process by the remote operation system of Fig. 2.
[Fig. 11]

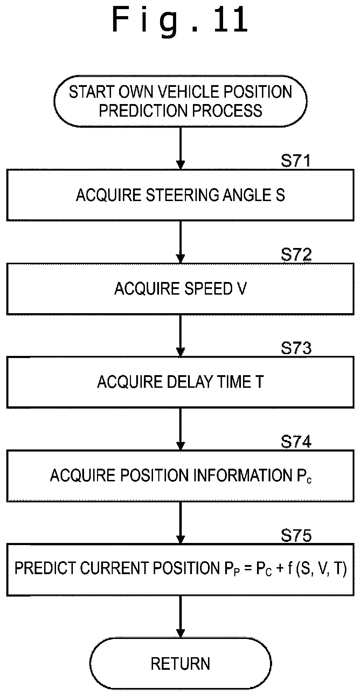

Fig. 11 is a flowchart for describing an own vehicle position prediction process of Fig. 10.
[Fig. 12]

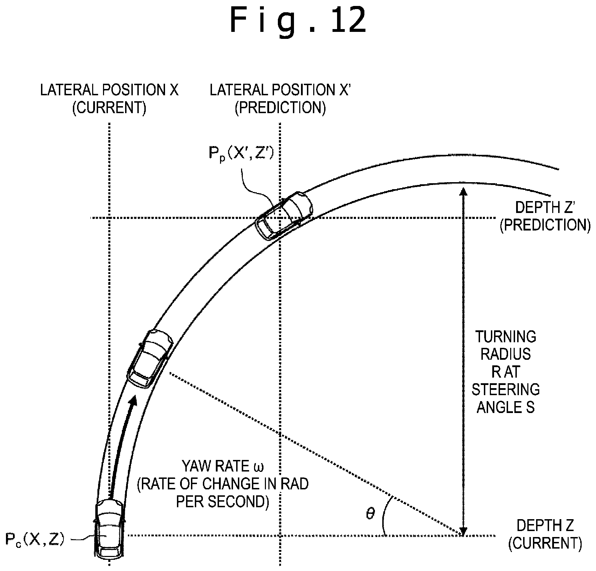

Fig. 12 is a diagram illustrating an own vehicle position prediction method.
[Fig. 13]

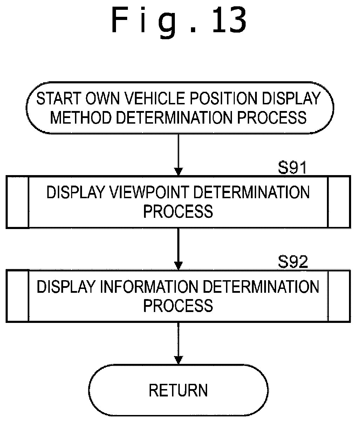

Fig. 13 is a flowchart for describing an own vehicle position display method determination process of Fig. 10.
[Fig. 14]

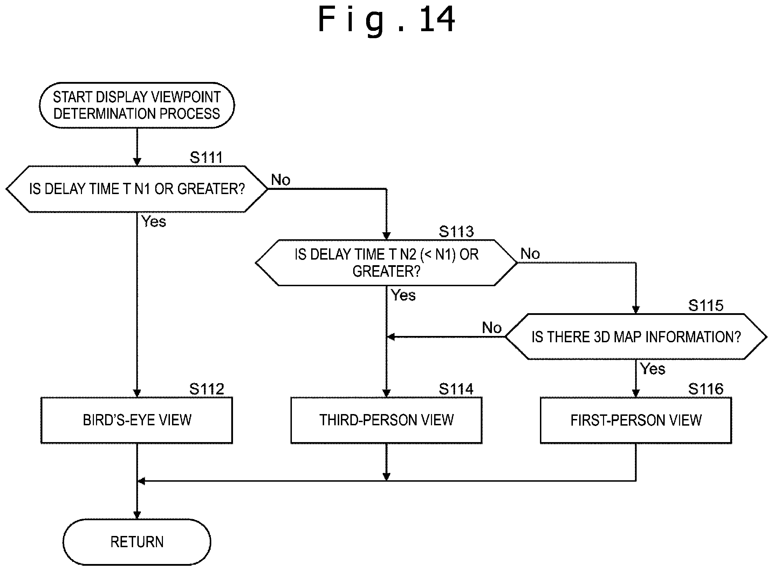

Fig. 14 is a flowchart for describing a display viewpoint determination process of Fig. 13.
[Fig. 15]

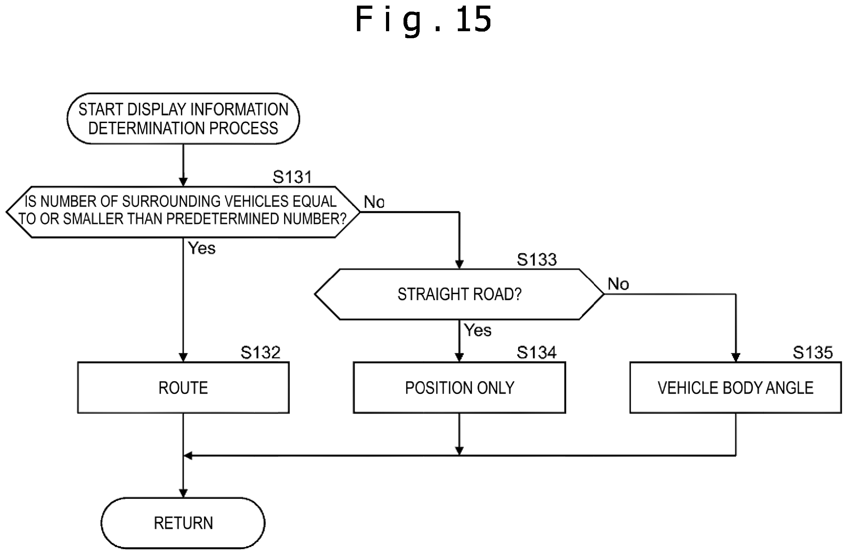

Fig. 15 is a flowchart for describing a display information determination process of Fig. 13.
[Fig. 16]

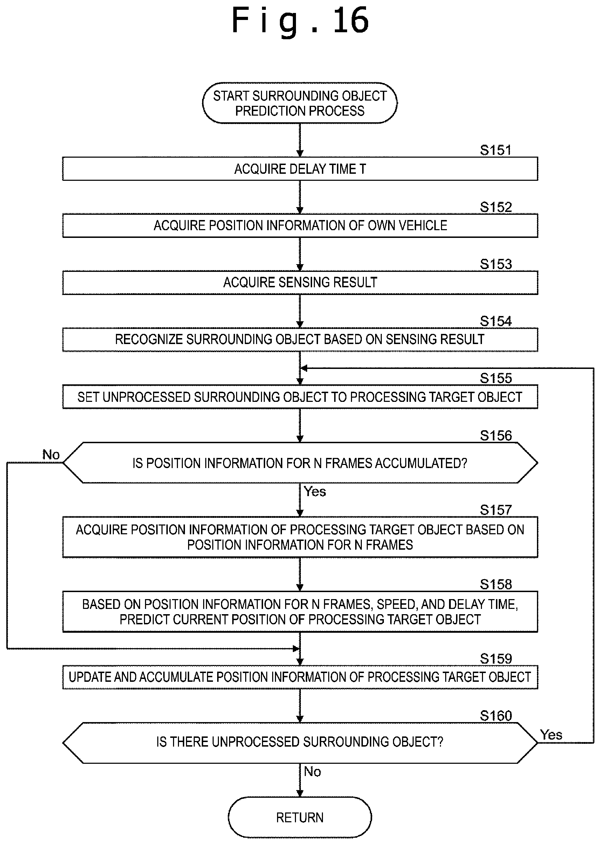

Fig. 16 is a flowchart for describing a surrounding object prediction process of Fig. 10.
[Fig. 17]

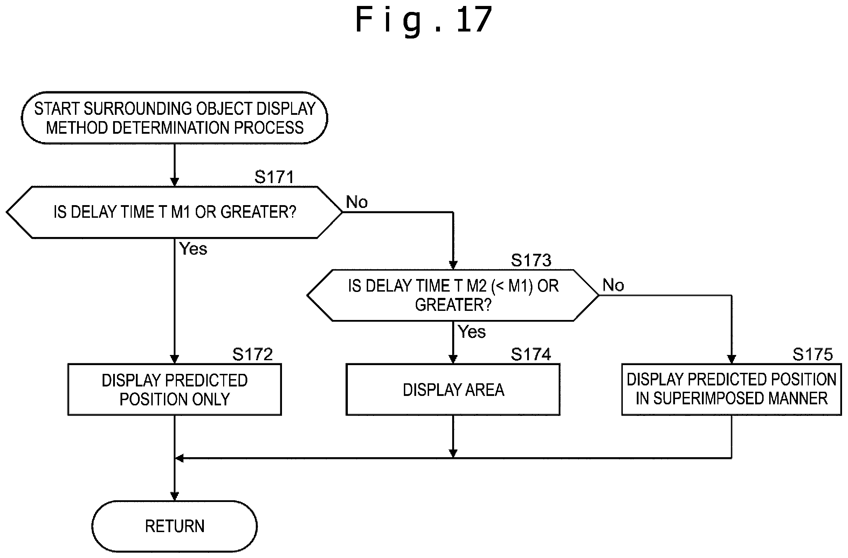

Fig. 17 is a flowchart for describing a surrounding object display method determination process of Fig. 10.
[Fig. 18]

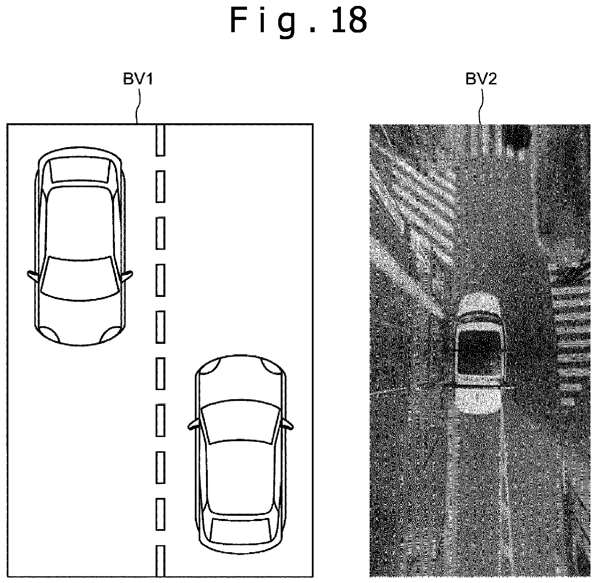

Fig. 18 is a diagram illustrating an application example of a bird's-eye view.
[Fig. 19]

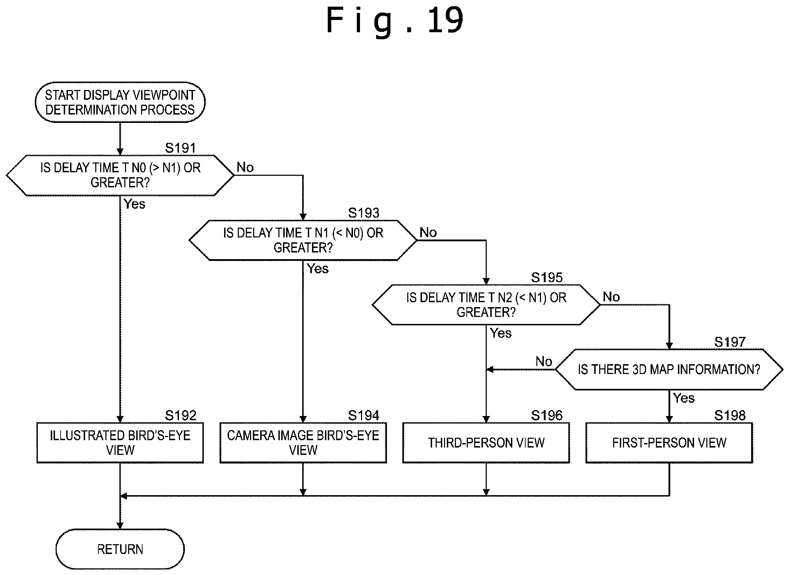

Fig. 19 is a flowchart for describing a display viewpoint determination process using the application example of the bird's-eye view of Fig. 18.
[Fig. 20]

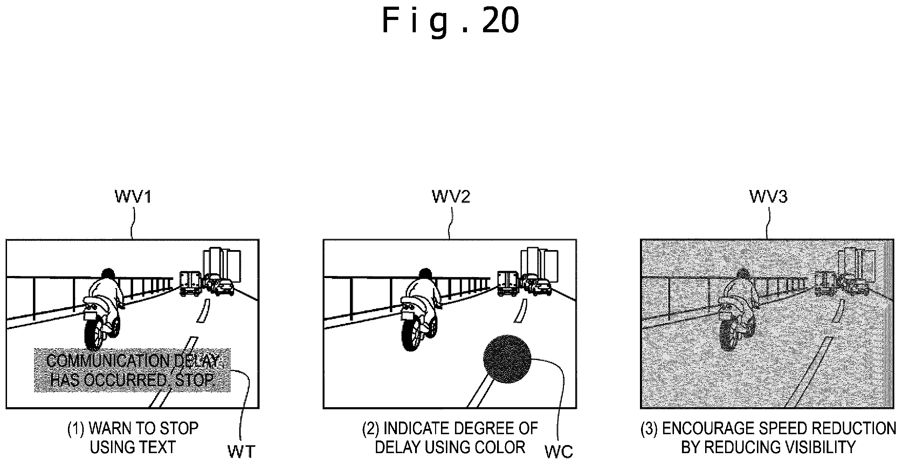

Fig. 20 is a diagram illustrating an example of a case where a warning display is provided in the surrounding object display method.
[Fig. 21]

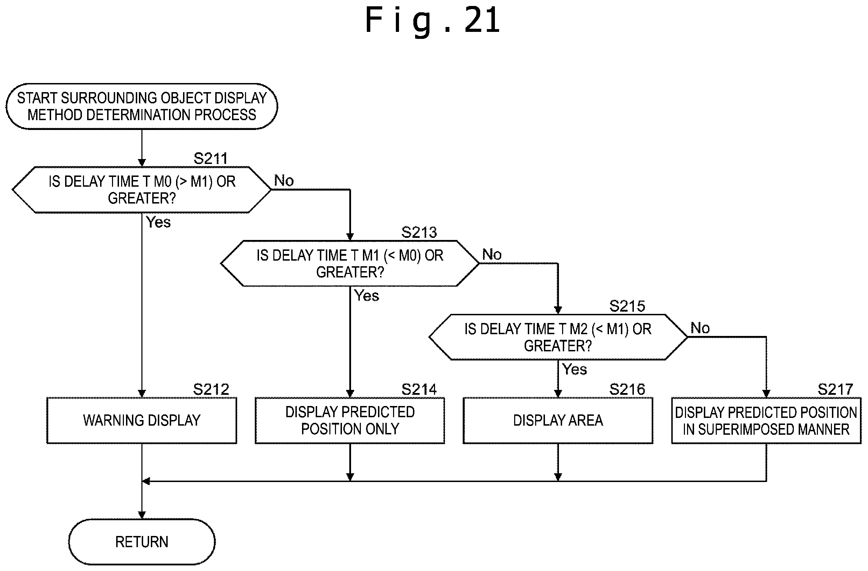

Fig. 21 is a flowchart for describing the surrounding object display method determination process in a case where the warning display of Fig. 20 is provided.
[Fig. 22]

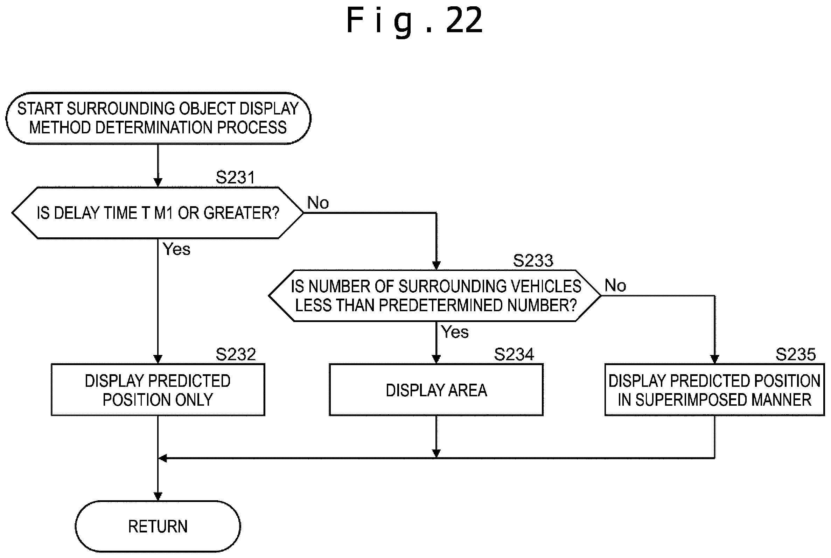

Fig. 22 is a flowchart for describing the surrounding object display method determination process in a case where factors of delay time are used for determination.
[Fig. 23]

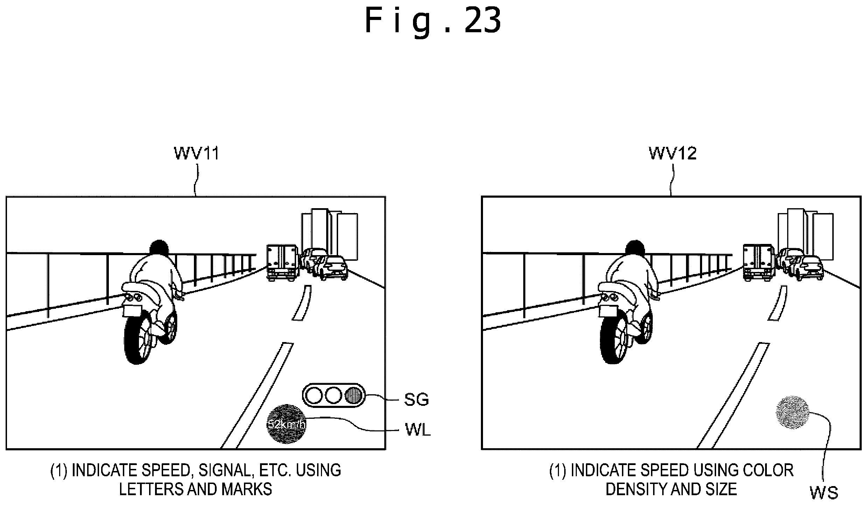

Fig. 23 is a diagram illustrating an application example of the display method for the own vehicle.
[Fig. 24]

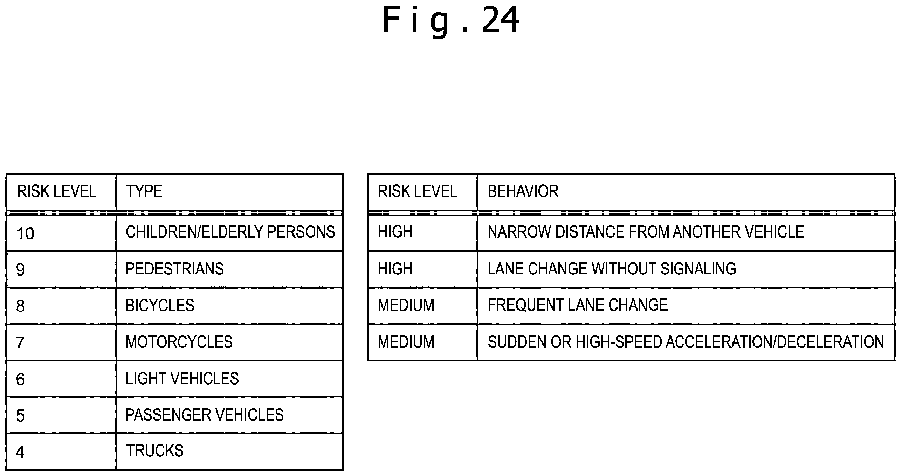

Fig. 24 is a diagram illustrating an application example of the display method for the surrounding vehicle.
[Fig. 25]

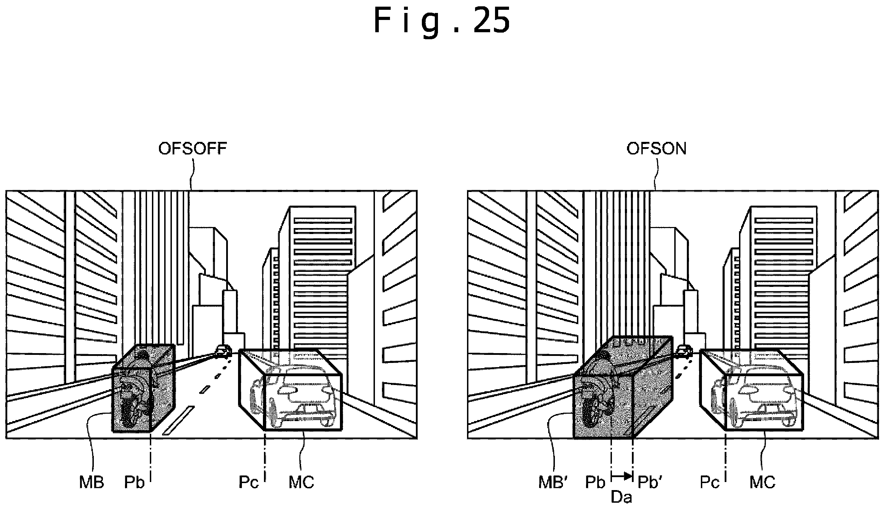

Fig. 25 is a diagram illustrating an application example of the display method for the surrounding vehicle.
[Fig. 26]

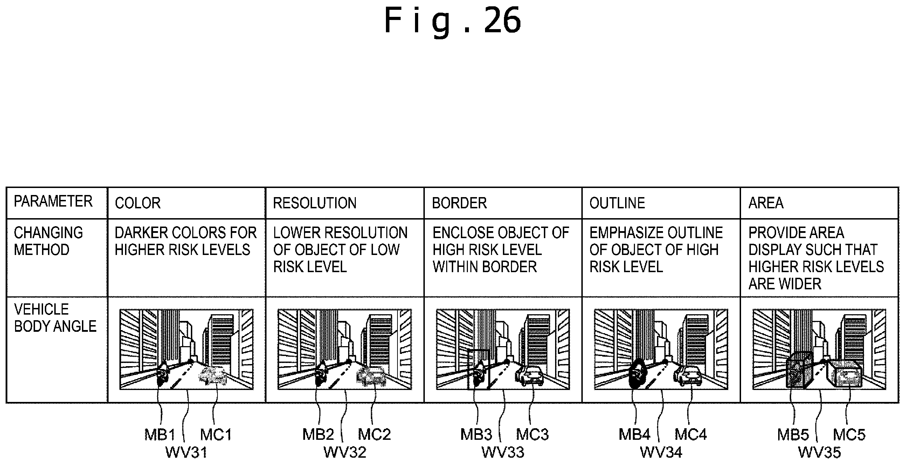

Fig. 26 is a diagram illustrating an application example of the display method for the surrounding vehicle.
[Fig. 27]

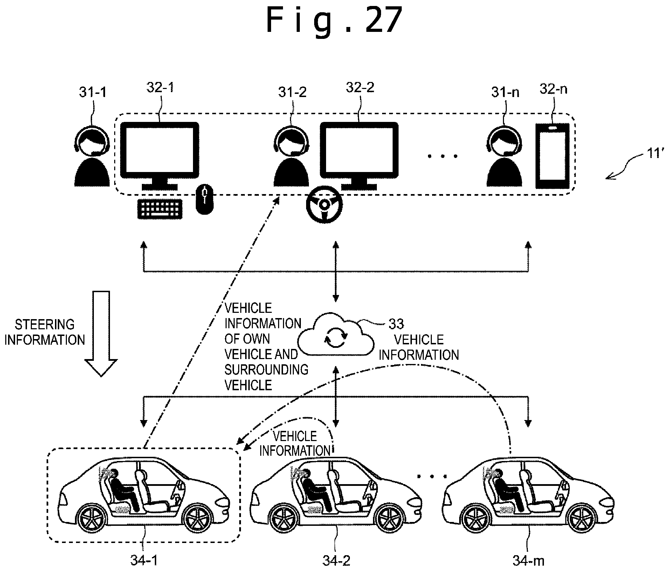

Fig. 27 is a diagram illustrating a configuration example of a remote operation system of a second embodiment of the present disclosure.
[Fig. 28]

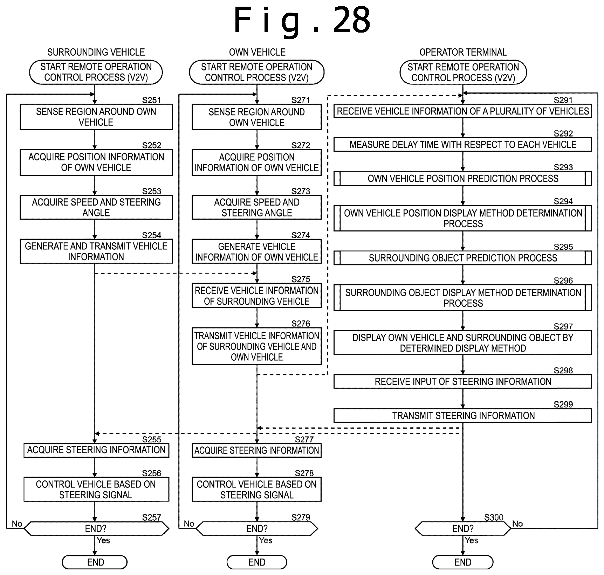

Fig. 28 is a flowchart for describing a remote operation control process by the remote operation system of Fig. 27.
[Fig. 29]

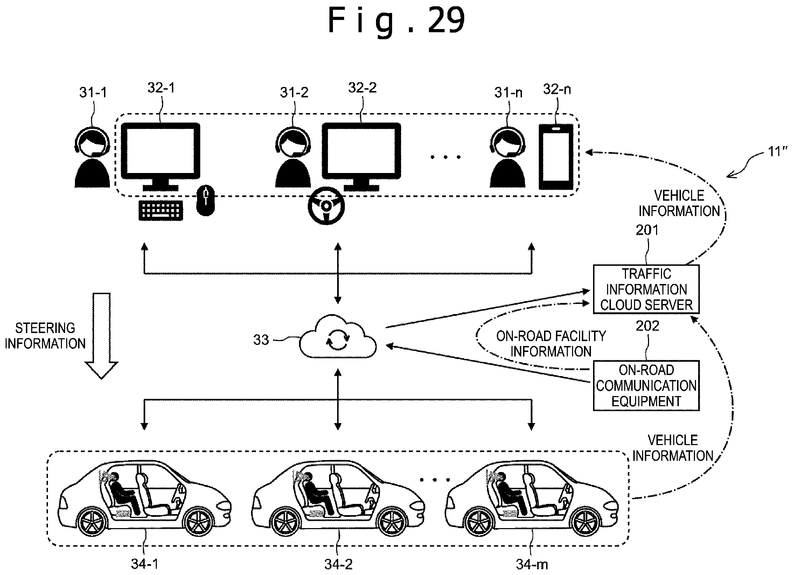

Fig. 29 is a diagram illustrating a configuration example of a modification of the remote operation system of the second embodiment of the present disclosure.
[Fig. 30]

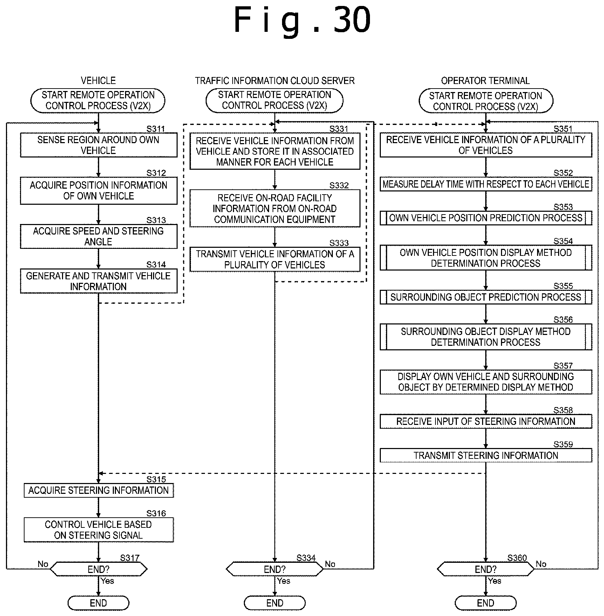

Fig. 30 is a flowchart for describing a remote operation control process by the remote operation system of Fig. 29.
[Fig. 31]

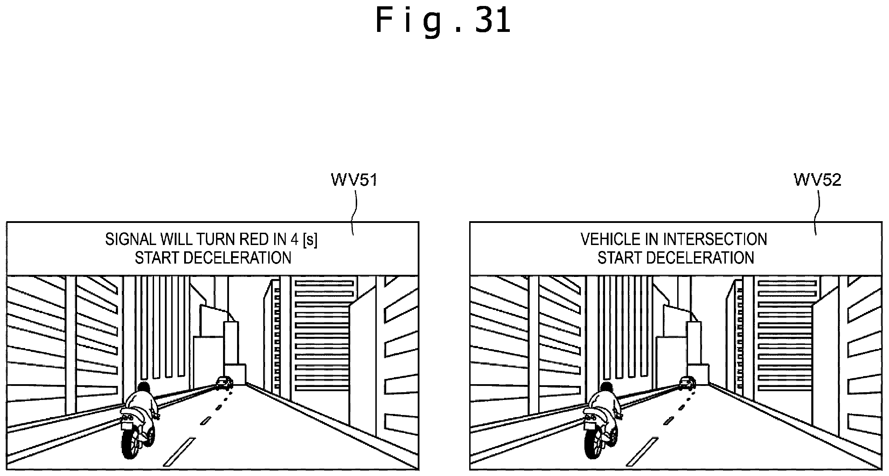

Fig. 31 is a diagram illustrating an application example of a warning display using V2X communication in the remote operation system of Fig. 29.
[Fig. 32]

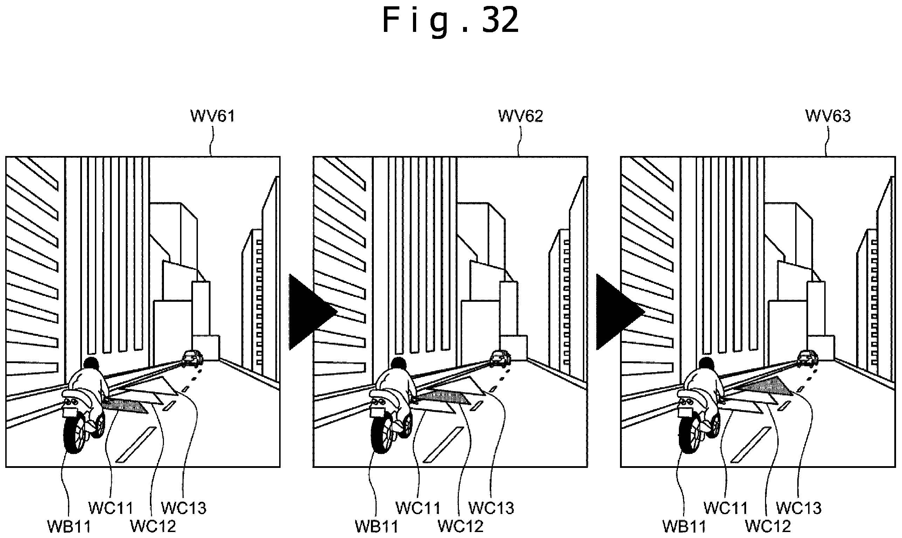

Fig. 32 is a diagram illustrating an application example of the surrounding object display method using V2X communication in the remote operation system of Fig. 29.
[Fig. 33]

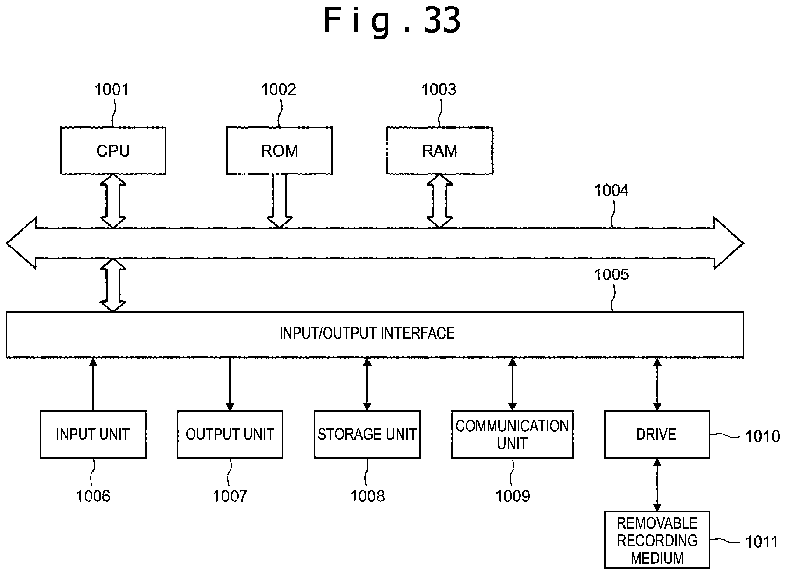

Fig. 33 is a diagram illustrating a configuration example of a general-purpose computer.

Description of Embodiments

Preferred embodiments of the present disclosure will be described in detail below with reference to the accompanying drawings. Note that, in the present specification and the drawings, components having substantially the same functional configuration are denoted by the same reference numeral, and redundant description thereof will be omitted.
Hereinafter, embodiments for implementing the present technology will be described. Description will be made in the following order.

1. Overview of Present Disclosure
2. First Embodiment
3. Second Embodiment
4. Modification of Second Embodiment
5. Example of Execution Using Software

1. Overview of Present Disclosure

Particularly, particularly, the present disclosure enables presentation of vehicle surroundings information transmitted from the vehicle in consideration of communication delay when the vehicle is operated from a remote place. Consequently, first, an overview of the present disclosure will be described.
Note that the technology of the present disclosure is applicable not only to vehicles but also generally to mobile bodies that can be remotely operated, such as ships and aircraft. However, the following describes an example of a remote operation of a vehicle, among such mobile bodies.
Development of autonomous driving technology is progressing, and in the near future, fully autonomous driving vehicles that do not require a driver are expected to be realized. However, prior to the widespread use of autonomous driving, situations are expected in which a remote operator monitors and operates the vehicle. In such cases, communication delays may cause difficulties in remote operation and monitoring.

For example, as illustrated in the upper section in Fig. 1, it is assumed that a vehicle 1 is remotely operated by an operation terminal 2 operated by the operator at a remote place.

In the upper section in Fig. 1, the vehicle 1 captures an image of the surroundings using a camera or the like and transmits it as vehicle surroundings information to the operation terminal 2.

In the operation terminal 2, when vehicle surroundings information transmitted from the vehicle 1 is acquired, an image of the surroundings of the vehicle 1 included in the vehicle surroundings information is presented to the operator. The operator inputs vehicle steering information for operating the vehicle 1 with reference to the image of the surroundings of the vehicle 1 presented on the operation terminal. The operation terminal 2 transmits to the vehicle 1 the vehicle steering information input from the operator.

Then, when receiving the vehicle steering information from the operation terminal 2, the vehicle 1 performs traveling based on the received vehicle steering information. Through such a series of processes, the operator at a remote place can remotely operate the vehicle 1 by operating the operation terminal 2.

However, communication between the vehicle 1 and the operation terminal 2 typically involves a delay.

As such, for example, at the time when a received image is presented after the image is captured by the vehicle 1 as vehicle surroundings information, transmitted to the operation terminal 2, and received at the operation terminal 2, a delay has occurred with respect to the transmission timing of the image, and the image to be presented is a past image that is lagged by the amount of the delay time.

More specifically, at the time when an image of the front side in the traveling direction is captured by the vehicle 1 and transmitted to the operation terminal 2, and thereafter an image VL illustrated in the upper left section in Fig. 1 is presented on the operation terminal 2, a past image that has already been lagged by the amount of the delay time is presented.

At the timing when the image VL illustrated in the upper left section in Fig. 1 is presented on the operation terminal 2, an image VC as illustrated in the upper right section in Fig. 1 is being captured, for example.

More specifically, an oncoming vehicle CL was located on the far side of a pedestrian crossing PC at the timing when the image VL was captured, but the oncoming vehicle CL advanced forward by the amount of the delay time that occurred during the transmission of the image from the vehicle 1 to the operation terminal 2, due to the communication delay. As such, practically, at the timing when the image VL is presented, the oncoming vehicle CL has moved onto the pedestrian crossing PC as illustrated in the image VC.

Specifically, even under the surrounding circumstances of the vehicle 1 illustrated in the image VC, the operator inputs vehicle steering information in the state where the past image VL that is lagged by the amount of the communication delay time is presented.

Consequently, the operability of the operator is reduced due to the delay, and the steering information is practically input based on the oncoming vehicle and pedestrians located at different positions, which results in a possibility of collision with the oncoming vehicle or surrounding pedestrians, and a risk of reduced safety.

In view of this, in the present disclosure, the position of the oncoming vehicle that has moved by the amount of delay time is estimated based on the past vehicle surroundings information, and estimation results are displayed in a superimposed manner, thereby enabling recognition of the actual position of the oncoming vehicle at the timing when the vehicle surroundings information is presented.

More specifically, for example, as illustrated in an image VF in the left lower section in Fig. 1, in addition to the oncoming vehicle CL obtained from the vehicle surroundings information, the position to which the oncoming vehicle moves by the amount of delay time is estimated, and displayed in a superimposed manner as an estimation result frame CF.

In this manner, even if communication delay has occurred between the vehicle 1 and the operation terminal 2, the operator can recognize the position of the oncoming vehicle at the current timing with the communication delay taken into account simply by visually recognizing the presented image VF as the vehicle surroundings information, and thus operability and safety in a remote operation can be improved.

2. First Embodiment

Next, with reference to Fig. 2, a configuration example of a remote operation system that operates a vehicle from a remote place to which the technology of the present disclosure is applied is described.

A remote operation system 11 of Fig. 2 is composed of operator terminals 32-1 to 32-n operated by operators 31-1 to 31-n, respectively as the operator, a network 33, and vehicles 34-1 to 34-m.

Note that in the following description, unless it is necessary to particularly distinguish them, the operators 31-1 to 31-n as the operator, the operator terminals 32-1 to 32-n, and the vehicles 34-1 to 34-m are simply referred to as the operator 31, the operator terminal 32, and the vehicle 34, respectively, and the same applies to other components.

The vehicle 34 is assumed to be remotely operated based on steering information supplied from the operator terminal 32, but it may also be assumed to be set to a remote operation mode of a vehicle that can also be directly operated by a driver being a driver on-board or a vehicle capable of fully autonomous driving.

The vehicle 34 acquires the own vehicle position, the steering angle of the steering wheel, the speed, and the information on the surrounding object, and transmits it as vehicle information to the operator terminal 32 through the network.

The vehicle information is information used for estimation of the current position of an own vehicle and a surrounding object considering the delay time of communication with the operator terminal 32. Among them, estimation of the current position of the own vehicle requires information on the own vehicle position, the steering angle of the steering wheel and the speed at the timing when the vehicle information is acquired.

In addition, examples of the information on the surrounding object include an image of the surroundings of the vehicle 34 captured with a camera or the like, and a distance image captured with a depth sensor or the like. Specifically, the information on the surrounding object is information with which the position and distance of a surrounding object of the vehicle 34 can be recognized. As such, the information on the surrounding object may include not only images captured with a camera and distance images, but also sensing results of an ultrasonic sensor and a radar.

When acquiring vehicle information transmitted from the vehicle 34 through the network 33, the operator terminal 32 measures the delay time of communication between it and the vehicle 34.

The operator terminal 32 estimates the positions of the vehicle 34 and the surrounding object of the vehicle 34 based on the vehicle information and delay time, generates the display image of the surroundings of the vehicle 34 used for the remote operation by displaying the estimation result in a superimposed manner on the original position information not considering the delay included in the vehicle information, and presents it to the operator 31.

At this time, the operator terminal 32 switches the presenting method based on the delay time, and presents the information on the own vehicle and the surroundings of the vehicle to the operator 31.

Note that the presentation of the display image of the surroundings of the vehicle 34 used for the remote operation is assumed to be displaying, on a display device or the like making up the operator terminal 32 such as a display, an image that can be visually recognized when the operator 31 is seated in the driver's seat of the vehicle 34, but this is not limitative.

Specifically, the display image of the surroundings of the vehicle 34 used for the remote operation may be displayed on a head mounted display (HMD) or the like, and the operator 31 may wear the HMD such that the display image is switched in accordance with changes in the eye direction, for example.

The operator 31 inputs steering information for operating the vehicle 34 based on the display image that is presented on the operator terminal 32 and required for the remote operation.

The operator terminal 32 transmits the steering information input by the operator 31 to the vehicle 34 through the network 33.

When acquiring the steering information transmitted by the operator terminal 32 through the network 33, the vehicle 34 controls the traveling based on the acquired steering information.

The operator terminal 32 may include operation input units of various forms. In Fig. 2, an example of the operator terminal 32-1 with an operation input unit 32a composed of a keyboard and a mouse is illustrated. In addition, an example of the operator terminal 32-2 with an operation input unit 32b composed of a steering wheel is illustrated. Further, an example of the operator terminal 32-3 with an operation input unit 32c composed of a touch panel that also functions as a display unit is illustrated.

The operation input units 32a to 32c are merely examples, and other configurations may be employed as long as they can be operated by the operator 31 and can receive input of steering information.

In addition, the vehicles 34-1 to 34-m subjected to the operation of the operator terminals 32-1 to 32-n may not be in a one-to-one relationship, and one operator terminal 32 may switch the vehicle 34 subjected to the operation to perform remote operation.

With the above-described configuration, the display image is presented to the operator 31 by being switched in accordance with the communication delay time, the position of the vehicle 34 is estimated in consideration of the communication delay time, and estimation results are displayed in a superimposed manner.

As a result, the operator 31 can visually recognize the influence of the communication delay, and thus operability and safety in a remote operation can be improved.

Configuration Example of Operator Terminal

Next, with reference to Fig. 3, a configuration example of the operator terminal 32 is described.

The operator terminal 32 is a terminal device or the like composed of a computer that operates on an operating system (OS) such as Windows (tradename), iOS (tradename), Linux (tradename), and android (tradename), and includes a control unit 51, an input unit 52, an output unit 53, a storage unit 54, a communication unit 55, a drive 56, and a removable storage medium 57, which are mutually connected via a bus 58, and can transmit and receive data and programs.

The control unit 51 is composed of a processor and a memory, and controls the overall operation of the operator terminal 32. In addition, the control unit 51 includes a steering information acquiring unit 71, a delay time acquiring unit 72, a vehicle information acquiring unit 73, a current position prediction unit 74, a display image creation unit 75, and a steering information supply unit 76.

The steering information acquiring unit 71 acquires the operation content when the input unit 52 is operated by the operator 31 and steering information is input. Note that the input unit 52 corresponds to the operation input units 32a to 32c and the like in Fig. 2.

The delay time acquiring unit 72 measures and acquires the delay time corresponding to the state of the network 33 by comparison between time information that is appended in transmission of vehicle information transmitted from the vehicle 34, and the current time information. Note that as this time information, it is possible to use time information obtained from satellite waves used for acquiring position information, for example.

The vehicle information acquiring unit 73 controls the communication unit 55 to receive vehicle information sent from the vehicle 34, and accumulates own position information of each vehicle 34 included in the vehicle information and the position information of vehicles and pedestrians around the vehicle 34 estimated based on the surrounding object information in a position information accumulation unit 92 in association with the time information.

The information accumulated in the position information accumulation unit 92 is information as illustrated in Fig. 4, and is an ID for individually identifying a target vehicle or pedestrian, type, measurement time, xyz coordinates as position information, and yaw information.

The type refers to a classification of vehicles or pedestrians, and includes, for example, the own vehicle, medium-sized vehicles, large vehicles, motorcycles, bicycles, and pedestrians. Note that the own vehicle refers to the vehicle 34 itself that has transmitted the vehicle information, while the others are classifications of vehicles or pedestrians detected as surrounding object information.

Note that this classification may be made by the vehicle information acquiring unit 73 through a semantic segmentation process based on the captured image, or by utilizing a trained deep neural network (DNN) or the like. In addition, other information may be added as the information accumulated in the position information accumulation unit 92. For example, as the orientation information, roll and pitch information may also be added in addition to yaw information.

The current position prediction unit 74 reads a prediction method stored in a prediction method storage unit 91 stored in the storage unit 54, and predicts the current position of the own vehicle based on the steering angle, speed, and own position information transmitted as vehicle information. The prediction method stored in the prediction method storage unit 91 is a calculation formula or a program capable of estimating the position when the steering angle, speed, own position information or the like is input, for example.

In addition, the current position prediction unit 74 predicts the current position based on the information on the positions of the vehicles and pedestrians around the vehicle 34 for a plurality of frames that is accumulated in the position information accumulation unit 92 in association with the time information.

The display image creation unit 75 generates the display image to be presented to the operator 31 based on the vehicle information acquired at the vehicle information acquiring unit 73, and outputs it to a display unit 81 of the output unit 53 to cause display unit 81 to display it.

At this time, the display image creation unit 75 generates the display image by switching the display method in accordance with the delay time.

Details of the display image that is generated by switching the display method in accordance with the delay time are described later.

The steering information supply unit 76 controls the communication unit 55 to transmit, and supply, the steering information acquired by the steering information acquiring unit 71 to the vehicle 34 to be operated.

The input unit 52 is composed of an input device such as a keyboard, mouse, steering wheel, and touch panel with which the operator 31 inputs the steering information, and supplies various signals corresponding to input steering information to the control unit 51.

The output unit 53, which is controlled by the control unit 51, includes the display unit 81 and a voice output unit 82. The display unit 81 is a display device composed of a liquid crystal display (LCD), organic electro luminescence (EL) or the like, and displays the display image created by the display image creation unit 75 and various processing results. In addition, the voice output unit 82 is composed of a voice output device such as a speaker, and outputs various voices and music, sound effects, and the like as a voice.

The storage unit 54 is composed of a hard disk drive (HDD), a solid state drive (SSD), a semiconductor memory, or the like, and writes or reads various data and programs under the control of the control unit 51. The storage unit 54 includes the prediction method storage unit 91 and the position information accumulation unit 92.

Under the control of the control unit 51, the communication unit 55 implements wired or wireless communication such as a local area network (LAN) and Bluetooth (tradename), and transmits and receives various data and programs between it and the vehicle 34 through the network 33 as necessary.

The drive 56 reads and writes data from and to the removable storage medium 57, such as a magnetic disk (including a flexible disk), an optical disk (including a compact disc-read only memory (CD-ROM), and a digital versatile disc (DVD), a magneto-optical disk (including a mini disc (MD)), or a semiconductor memory.

Configuration Example of Vehicle

Next, with reference to the block diagram of Fig. 5, a configuration example of the vehicle 34 is described.

The vehicle 34 includes a vehicle control electronic control unit (ECU) 111, a communication unit 112, a map information accumulation unit 113, a position information acquiring unit 114, an external recognition sensor 115, an in-vehicle sensor 116, a vehicle sensor 117, a storage unit 118, an operation control unit 119, a driver monitoring system (DMS) 120, a human machine interface (HMI) 121, and a vehicle control unit 122.

The vehicle control ECU 111, the communication unit 112, the map information accumulation unit 113, the position information acquiring unit 114, the external recognition sensor 115, the in-vehicle sensor 116, the vehicle sensor 117, the storage unit 118, the operation control unit 119, the DMS 120, the HMI 121, and the vehicle control unit 122 are mutually communicatively connected through a communication network 123. The communication network 123 is composed of an in-vehicle communication network or bus conforming to digital bidirectional communication standards such as controller area network (CAN), local interconnect network (LIN), local area network (LAN), FlexRay (tradename), and Ethernet (tradename), for example.

The vehicle control ECU 111 is composed of various processors such as a central processing unit (CPU) and a micro processing unit (MPU). The vehicle control ECU 111 controls some or all of the functions of the vehicle 34.

The communication unit 112 communicates with the operator terminal 32, various devices inside and outside the vehicle, other vehicles, servers, base stations, and the like, and transmits and receives various data. At this time, the communication unit 112 can perform communication using a plurality of communication schemes.

Communication with the outside of the vehicle that can be executed by the communication unit 112 is outlined below. The communication unit 112 communicates with a server existing on an external network (hereinafter referred to as external server) and the like through the base station or the access point, using wireless communication schemes such as 5G (fifth generation mobile communication system), long term evolution (LTE), and dedicated short range communications (DSRC), for example. Examples of the external network with which the communication unit 112 performs communication include the Internet, cloud network, and a proprietary network of a service provider. The communication scheme used by the communication unit 112 for the external network is not particularly limited as long as it is a wireless communication scheme capable of digital bidirectional communication at a predetermined or higher communication speed and over a predetermined or longer distance.

In addition, for example, the communication unit 112 can communicate with a terminal located near the own vehicle using a peer to peer (P2P) technique. Examples of the terminal located near the own vehicle include a terminal mounted on a mobile body moving at a relatively low speed such as a pedestrian or a bicycle, a terminal installed at fixed locations such as stores, and a machine type communication (MTC) terminal. Further, the communication unit 112 can also perform V2X communication. The V2X communication refers to communication between the own vehicle and other entities, such as vehicle to vehicle (V2V) communication with other vehicles, vehicle to infrastructure (V2I) communication with roadside units and the like, vehicle to home (V2H) communication, and vehicle to pedestrian (V2P) communication with terminals carried by pedestrians.

The communication unit 112 can receive from the outside a program for updating the software for controlling the operation of the remote operation system 11 (over the air), for example. Further, the communication unit 112 can receive map information, traffic information, information on the surroundings of the vehicle 34, and the like from the outside. In addition, the communication unit 112 can transmit to the outside information related to the vehicle 34, information on the surroundings of the vehicle 34, and the like, for example. Examples of the information related to the vehicle 34 transmitted by the communication unit 112 to the outside include data representing the state of the vehicle 34 and the like. Further, the communication unit 112 performs communication compatible with a vehicle emergency call system such as eCall, for example.

For example, the communication unit 112 receives electromagnetic waves transmitted by a vehicle information and communication system (VICS) (tradename) such as a radio beacon, an optical beacon, and FM multiplex broadcasting.

The map information accumulation unit 113 accumulates one or both of a map acquired from the outside and a map created by the vehicle 34. For example, the map information accumulation unit 113 accumulates a three-dimensional high-precision map, a global map having lower accuracy than the high-precision map but covering a wider area, and the like.

The position information acquiring unit 114 receives a global navigation satellite system (GNSS) signal from a GNSS satellite, and acquires position information of the vehicle 34. The acquired position information is supplied to the operation control unit 119. Note that the method using the GNSS signal is not limitative, and the position information acquiring unit 114 may acquire position information using a beacon, for example.

The external recognition sensor 115 includes various sensors used for recognizing the circumstances outside the vehicle 34, and supplies sensor data from each sensor to each unit of the vehicle 34. The type and number of sensors provided in the external recognition sensor 115 are arbitrary.

For example, the external recognition sensor 115 includes a camera 131, a radar 132, a light detection and ranging, laser imaging detection and ranging (LiDAR) 133, and an ultrasonic sensor 134. This is not limitative, and the external recognition sensor 115 may have a configuration including one or more sensors of the camera 131, a radar 511, the LiDAR 133, and the ultrasonic sensor 134. Note that sensors other than the LiDAR 133, such as depth sensors and stereo cameras, may be used as long as the distance from surrounding vehicles and pedestrians can be measured, for example.

The in-vehicle sensor 116 includes various sensors for detecting information inside the vehicle, and supplies sensor data from each sensor. The type and number of the various sensors provided in the in-vehicle sensor 116 are not particularly limited as long as they are of types and numbers that can be practically installed in the vehicle 34.

The vehicle sensor 117 includes various sensors for detecting the state of the vehicle 34, and supplies sensor data from each sensor. The type and number of the various sensors provided in the vehicle sensor 117 are not particularly limited as long as they are of types and numbers that can be practically installed in the vehicle 34.

For example, the vehicle sensor 117 includes a speed sensor, an acceleration sensor, an angular velocity sensor (gyro sensor), and an integrated inertial measurement unit (IMU) that integrates these sensors. For example, the vehicle sensor 117 includes a steering angle sensor that detects the steering angle of the steering wheel, a yaw rate sensor, an accelerator sensor that detects the amount of operation of the accelerator pedal, and a brake sensor that detects the amount of operation of the brake pedal. For example, the vehicle sensor 117 includes a rotation sensor that detects the rotation speed of an engine or motor, a pressure sensor for detecting the air pressure of a tire, a slip ratio sensor for detecting the slip ratio of a tire, and a wheel speed sensor for detecting the rotational speed of a wheel. For example, the vehicle sensor 117 includes a battery sensor for detecting the remaining charge and temperature of a battery, and an impact sensor for detecting an impact from the outside.

The storage unit 118 includes at least one of a nonvolatile storage medium and a volatile storage medium, and stores data and programs. The storage unit 118 is used as an electrically erasable programmable read only memory (EEPROM) and a random access memory (RAM), and as the storage medium, a magnetic storage device such as a hard disc drive (HDD), a semiconductor storage device, an optical storage device, and a magneto-optical storage device can be employed, for example. The storage unit 118 stores various programs and data used by each unit of the vehicle 34.

The operation control unit 119 controls the operation function of the vehicle 34. The operation control unit 119 includes a steering control unit 141, a sensor information acquiring unit 142, and a vehicle information communication unit 143.

The steering control unit 141 controls the communication unit 112 to acquire steering information transmitted from the operator terminal 32, and controls the vehicle control unit 122 based on the acquired steering information to control operations related to the traveling of the vehicle 34 such as steering, acceleration, deceleration, and stopping.

The sensor information acquiring unit 142 acquires, as vehicle surroundings information, detection results acquired by the external recognition sensor 115 with which the positions and distances of other vehicles and pedestrians around the vehicle 34 can be recognized.

The vehicle information communication unit 143 forms vehicle information by collecting position information of the own vehicle acquired from the position information acquiring unit 114, surrounding object information acquired by the sensor information acquiring unit 142 with which the positions and distances of other vehicles and pedestrians around the vehicle 34 can be recognized, the steering angle of the own vehicle detected by the vehicle sensor 117, and speed information, and controls the communication unit 112 to transmit it to the operator terminal 32. In addition, the vehicle information may include information related to the vehicle body and specifications of the vehicle 34, such as the wheelbase length and tire diameter of the vehicle 34, which are required for predicting the position of the own vehicle as will be described later.

The DMS 120 performs an authentication process of the driver and a recognition process of the driver's condition based on sensor data from the in-vehicle sensor 116 and input data input to the HMI 121 described later. Examples of the driver's conditions to be recognized include physical condition, arousal level, concentration level, fatigue level, gaze direction, degree of intoxication, driving operations, and posture.

Note that the DMS 120 may also perform the authentication process for users other than the driver and the recognition process of the conditions of such users. Further, for example, the DMS 120 may perform the recognition process of the in-vehicle environment based on sensor data from the in-vehicle sensor 116. Examples of in-vehicle conditions to be recognized include temperature, humidity, brightness, and odor, for example.

The HMI 121 inputs various data, instructions and the like, and presents the various data to the user.

The vehicle control unit 122 controls each unit of the vehicle 34. The vehicle control unit 122 includes a steering control unit 151, a brake control unit 152, a drive control unit 153, a body system control unit 154, a light control unit 155, and a horn control unit 156.

The steering control unit 151 performs detection, control and the like of the state of the steering system of the vehicle 34. The brake control unit 152 performs detection, control and the like of the state of the brake system of the vehicle 34. The drive control unit 153 performs detection, control and the like of the state of the drive system of the vehicle 34. The drive system includes a driving force generation device for generating the driving force of the accelerator pedal, internal combustion engine, driving motor or the like, a driving force transmission mechanism for transmitting the driving force to the wheel, and the like, for example. The body system control unit 154 performs detection, control and the like of the state of the body system of the vehicle 34. The light control unit 155 performs detection, control and the like of the states of various lights of the vehicle 34. The horn control unit 156 performs detection, control and the like of the state of the car horn of the vehicle 34.

Display Method for Own Vehicle

Next, with reference to Fig. 6, a display method for the own vehicle in a display image created by the display image creation unit 75 is described.

The display method for the own vehicle includes two factors, the display viewpoint and the display information. The display image creation unit 75 creates a display image displaying the own vehicle by switching the display viewpoint and the display information in accordance with the delay time.

Fig. 6 illustrates an example of a display image that is generated by changing the display method by switching the display viewpoint and the display information.

As illustrated in Fig. 6, there are three types of display viewpoints, which are a bird's-eye view, a third-person view, and a first-person view.

The bird's-eye view is a display method that provides a top-down perspective of the own vehicle, surrounding vehicles, and pedestrians, and is a display image in which the predicted positions of the own vehicle, surrounding vehicles, and pedestrians are drawn on a two-dimensional map, such as those employed in general car navigation systems. It is a display viewpoint that entails the lightest processing load for generating the display image.

The third-person view is a display image in which the predicted positions of the own vehicle, surrounding vehicles, and pedestrians are drawn from a third-person viewpoint position within an image captured by the camera 131 included in the vehicle information. It is a display viewpoint that entails a heavier processing load for generating the display image than the bird's-eye view.

The first-person view is a display image in which the predicted positions of surrounding vehicles and pedestrians are drawn on a computer graphics (CG) image based on 3D map information, corresponding to an image captured by the camera 131 from the viewpoint position of an occupant riding in the vehicle 34. It is a display viewpoint that entails a heavier processing load for generating the display image than the third-person view.

The first-person view is a CG image that reproduces an image captured by the camera 131 provided in the own vehicle when there is no occurrence of delay. Therefore, in generating a display image composed of the first-person view, the cognitive load and learning cost are low; however, 3D map information of the area to be traveled is required in advance. In addition, since the first-person view is a CG image that reproduces an image captured by the camera 131 provided in the own vehicle when there is no occurrence of delay, it is an image that is expected to be visually recognized when boarding the own vehicle, and as such the own vehicle itself is not displayed.

In addition, there are three types of display information, which are position only, vehicle body angle, and route.

In the case where the display information is the position only, the display image indicates only the predicted position using two-dimensional shapes such as circles or squares together with the recognized own position.

In the case where the display information is the vehicle body angle, the angle of the vehicle body or the angle of the tires is made recognizable by providing a tail in the circle indicating the predicted position or displaying it as a cube, for example. This increases the ease of steering operations such as lane changes and right or left turns.

In the case where the display information is the route, the expected traveling route is drawn in addition to the predicted position.

Fig. 6 illustrates examples of display images of the bird's-eye view, third-person view, and first-person view in this order from left in the horizontal direction in the drawing, and examples of display images of the position only, vehicle body angle, and route in this order from top in the vertical direction.

In the case of the display image in which the display viewpoint is the bird's-eye view and the display information is the position only, a motorcycle as a surrounding vehicle is represented by a rectangular mark in the left lane in the drawing. In addition, the own position based on the vehicle information is represented by a light gray circular mark on the lower side of the right lane. Further, the current own position predicted based on the own position in the vehicle information and the delay time is represented by a dark gray circular mark on the upper side.

In the case of the display image in which the display viewpoint is the bird's-eye view and the display information is the vehicle body angle, a motorcycle as a surrounding vehicle is represented by a rectangular mark in the left lane in the drawing. In addition, the own position based on the vehicle information is represented by a light gray circular mark on the lower side of the right lane. Further, the own position predicted based on the own position in the vehicle information and the delay time is represented by a dark gray circular mark on the upper side, and further, the vehicle body angle is represented by the orientation of the protrusion.

In the case of the display image in which the display viewpoint is the bird's-eye view and the display information is the route, a motorcycle as a surrounding vehicle is represented by a rectangular mark in the left lane in the drawing. In addition, the position based on the own position information of the own vehicle is represented by a light gray circular mark on the lower side in the right lane. Further, the own position predicted based on the own position in the vehicle information and the delay time is represented by a dark gray circular mark on the upper side, and the route is represented by a curve on the right lane.

In the case of the display image in which the display viewpoint is the third-person view and the display information is the position only, a motorcycle as a surrounding vehicle is displayed in the left lane in the drawing on an image captured by the camera 131. In addition, the own position predicted based on the own position in the vehicle information and the delay time is represented by a gray circular mark in the right lane.

In the case of the display image in which the display viewpoint is the third-person view and the display information is the vehicle body angle, a motorcycle as a surrounding vehicle is displayed in the left lane in the drawing on an image captured by the camera 131. In addition, the own position predicted based on the own position in the vehicle information and the delay time is represented by a box-shaped mark in the right lane.

In the case of the display image in which the display viewpoint is the third-person view and the display information is the route, a motorcycle as a surrounding vehicle is displayed in the left lane in the drawing on an image captured by the camera 131. In addition, the own position predicted based on the own position in the vehicle information and the delay time is represented by a circular mark in the right lane, and the route is represented by a curve on the right lane.

In the case of the display image in which the display viewpoint is the first-person view and the display information is the position only, a motorcycle as a surrounding vehicle is displayed in the left lane in the drawing on a CG image generated based on 3D map information, which corresponds to an image captured by the camera 131.

In the case of the display image in which the display viewpoint is the first-person view and the display information is the vehicle body angle, a motorcycle is displayed in the left lane in the drawing and the vehicle body angle is represented by a circular mark and an arrow in the right lane on a CG image generated based on 3D map information, which corresponds to an image captured by the camera 131.

In the case of the display image in which the display viewpoint is the first-person view and the display information is the route, a motorcycle is displayed in the left lane in the drawing and the route is represented by a curve in the right lane on a CG image generated based on 3D map information, which corresponds to an image captured by the camera 131.

Regarding the display viewpoint, the processing load is heaviest in the first-person view, followed by the third-person view, and then the bird's-eye view. Accordingly, basically, a display viewpoint with a lighter processing load is selected as the delay time increases.

In addition, the display information is selected in accordance with visibility. For example, in the case where there are few surrounding vehicles, the number of elements to be displayed in a superimposed manner is small, and as such the route is selected as the display information. In addition, in the case where there are a certain number of surrounding vehicles, when a long straight path continues, the position only is selected as the display information because it is considered that there will be little change in the vehicle body, whereas in other cases, the vehicle body angle is selected as the display method.

Display Method for Surrounding Objects

Next, with reference to Fig. 7, a display method for surrounding objects is described.

Since the positions of surrounding objects are predicted based on accumulated position information, they are not absolute position information.

In view of this, while the positions of surrounding vehicles and pedestrians as surrounding objects are prediction results and are not absolute positions, the range where they may exist is explicitly displayed.

The display method for surrounding objects includes three types, which are superimposed display of predicted position, area display, and display of predicted position only.

For example, the superimposed display of predicted position is a display that indicates the predicted position at a pinpoint location on the display image, and is, for example, display images (1-1) and (1-2) in Fig. 7 and the like.

In the display image (1-1), the predicted position is represented by a circular mark in the camera image of the third-person view.

In addition, the predicted position is drawn by a box-shaped mark on a CG image of the first-person view in the display image (1-2), but in a case where it overlaps a target object on the camera image of the third-person view, it is indicated such that the box-shaped mark does not overlap the target object.

In the area display of the predicted position, the range where the target object may exist is drawn as an area rather than representing the prediction result at a pinpoint location. It should be noted that in the area display, safety is ensured by enabling a broader view of the prediction results, but when there are many target objects, they may overlap, which makes their individual identification difficult.

In a display image (2-1), the target object is represented by a box or the like enclosing the entire range where it may exist. The target object image may also be clipped and enlarged to draw the area.

In a display image (2-2), the target object is drawn with a gradation effect corresponding to the probability of its presence. In addition to applying the effect to the entire target object, it may alternatively be drawn in a superimposed manner on the road surface portion.

In a display image (2-3), while no effect is applied on the target object, but it is represented with reduced image quality. That is, since the target object is made less visually recognizable, the necessity of deceleration can be easily recognized.

In a display image (2-4), only an effect is drawn for the predicted position of the target object.

In the display of predicted position only, the target object is removed from the generated CG image and only the predicted position is drawn. As such, while the display of predicted position only is simple and easy to understand, it may cause misrecognition when the delay is large and the prediction accuracy is low.

In a display image (3-1), the image of the target object is clipped and drawn at the predicted position, and displayed in a superimposed manner. Note that the dotted ellipse and the arrow in the display image (3-1) are not designed to be indicated on the display image, but the dotted ellipse represents the position prior to clipping where the image of the motorcycle as the target object was originally located, and the arrow represents the distance and direction of the movement of the clipped image.

In a display image (3-2), a shape such as a box shape is drawn at the predicted position of the target object, and displayed in a superimposed manner.

In the surrounding object display method, the processing load required for generating the display image is heaviest in the display of predicted position only, followed by the area display, and then the superimposed display of predicted position, and therefore, basically, as the delay time increases, the display method with the lower processing load is selected.

It should be noted that although the description has been given with respect to the first-person view in Fig. 7, the same representation may also be applied to the bird's-eye view or the third-person view.

Specifically, as illustrated in the display image on the left side in Fig. 8, in the case of the bird's-eye view, a gray rectangular mark representing the predicted position in an extended manner is displayed in a superimposed manner for a motorcycle as a surrounding vehicle represented by the rectangular mark.

In addition, as illustrated in the display image at the center in Fig. 8, in the third-person view, as with the first-person view, the predicted range is displayed as a semi-transparent box in a superimposed manner at the position where a motorcycle as a surrounding vehicle is drawn.

Note that the display image on the right side in Fig. 8 illustrates an example in which in the first-person view, the predicted range is displayed as a semi-transparent box in a superimposed manner at the position where a motorcycle as a surrounding vehicle is drawn.

Modification of Display Method for Surrounding Objects

In the foregoing, an example of the display method for surrounding objects based on the predicted position has been described, but in the case where the position information of the surrounding object for a plurality of frames can be acquired together with the predicted position, the speed of the surrounding object can also be estimated.

Here, when there is a surrounding object ahead of the own vehicle that can be recognized as decelerating based on a change in speed, it is necessary to decelerate early when traveling behind that surrounding object.

In view of this, when there is a surrounding object ahead of the own vehicle that can be recognized as decelerating based on a change in speed, it is possible to display the surrounding object such that the deceleration is recognizable.

Specifically, for example, as illustrated in the display image on the left side in Fig. 9, a box-shaped mark may be displayed in a superimposed manner such that the predicted position is located on the rear side of the surrounding object.

In addition, for example, as illustrated in the display image at the center in Fig. 9, a box-shaped mark extending rearward including the surrounding object may be displayed in a superimposed manner.

Further, for example, as illustrated in the display image on the right side in Fig. 9, the surrounding object image may be clipped and shifted rearward to display it. Note that in the display image on the right side in Fig. 9, the image of the motorcycle as the surrounding object is clipped from the portion of the dotted circular mark, and displayed in a shifted manner to the own vehicle side indicated by the arrow, and practically, the dotted line and arrow are not displayed.

Remote Operation Control Process

Next, with reference to the flowchart of Fig. 10, a remote operation control process performed by the remote operation system 11 of Fig. 2 is described.

At step S31, the sensor information acquiring unit 142 acquires detection results acquired by the external recognition sensor 115 with which the positions and distances of other vehicles and pedestrians around the vehicle 34 can be recognized. Specifically, the sensor information acquiring unit 142 acquires, as surrounding object information, a camera image capturing the surroundings, a distance image with which the distance from the surrounding object can be recognized and the like.

At step S32, the sensor information acquiring unit 142 acquires position information of the own vehicle from the position information acquiring unit 114.

At step S33, the sensor information acquiring unit 142 acquires information on the steering angle (steering angular degrees) and speed of the own vehicle detected by the vehicle sensor 117.

At step S34, the vehicle information communication unit 143 forms vehicle information by collecting position information of the own vehicle acquired from the position information acquiring unit 114, surrounding object information acquired by the sensor information acquiring unit 142 and composed of a sensing result with which the positions and distances of other vehicles and pedestrians around the vehicle 34 can be recognized, and information on the steering angle (steering angular degrees) and speed of the own vehicle detected by the vehicle sensor 117, and controls the communication unit 112 to transmit it to the operator terminal 32.

At this time, when transmitting the vehicle information by controlling the communication unit 112, the vehicle information communication unit 143 transmits the information together with information for identifying the vehicle 34 and time information indicating the transmission timing.

At step S51, the vehicle information acquiring unit 73 controls the communication unit 55 to acquire vehicle information transmitted from the vehicle 34.

At this time, the vehicle information acquiring unit 73 associates time information of the timing when the vehicle information has been acquired, with the vehicle information.

At step S52, from the difference between the time information indicating the transmission timing appended to the vehicle information acquired by the vehicle information acquiring unit 73, and the time information representing the reception time of the vehicle information stored in association with the vehicle information, the delay time acquiring unit 72 measures the delay time of the communication between the vehicle 34 and the operator terminal 32, and acquires the delay time as a measurement result.

At step S53, the current position prediction unit 74 executes an own vehicle position prediction process based on the acquired vehicle information, and predicts the own vehicle position of the vehicle 34 that has transmitted the vehicle information.

Note that the own vehicle position prediction process will be described later with reference to Figs. 11 and 12.

At step S54, the display image creation unit 75 executes an own vehicle position display method determination process based on the delay time, and determines the display method for the own vehicle position.

Note that the own vehicle position display method determination process will be specifically described later with reference to Figs. 13 to 15.

At step S55, the current position prediction unit 74 executes a surrounding object prediction process based on the vehicle information, and predicts the positions of the vehicles and pedestrians around the vehicle 34 that has transmitted the vehicle information.

Note that the surrounding object prediction process will be specifically described later with reference to Fig. 16.

At step S56, the display image creation unit 75 executes a surrounding object display method determination process based on the delay time, and determines the display method for surrounding objects.

Note that the surrounding object display method determination process will be specifically described later with reference to Fig. 17.

At step S57, the display image creation unit 75 displays the own vehicle position by the own vehicle position display method determined by the own vehicle position display method determination process, generates the display image displaying the surrounding object by the surrounding object display method determined by the surrounding object display method determination process, and outputs it to the display unit 81 to display it.

Through this process, a display image in which the own vehicle and its surrounding objects are displayed by a display method considering the communication delay at a predicted position considering the communication delay is displayed on the display unit 81.

In this manner, the operator 31 can operate the vehicle 34 while appropriately visually recognizing the positional relationship between the own vehicle position and the surrounding object for the vehicle 34 by viewing a display image with reduced influence of the communication delay displayed on the display unit 81.

At step S58, the steering information acquiring unit 71 acquires steering information that is input when the input unit 52 is operated by the operator 31.

At step S59, the steering information supply unit 76 controls the communication unit 55 to transmit to the vehicle 34 the steering information that is input by the operator operating the input unit 52 and acquired by the steering information acquiring unit 71.

At step S35, the steering control unit 141 controls the communication unit 112 to acquire the steering information transmitted from the operator terminal 32.

At step S36, the steering control unit 141 controls the vehicle control unit 122 based on the steering information to control the traveling of the vehicle 34.

At steps S37 and S60, whether the completion of the process has been instructed is determined, and when the completion has not been instructed, the process is returned to steps S31 and S51, respectively, and the subsequent processes are repeated.

Then, at steps S37 and S60, when the completion of the process is instructed, the process is completed.

Through the above-described series of processes, a display image in which the own vehicle and its surrounding objects are displayed by a display method corresponding to the communication delay time at a predicted position corresponding to the communication delay time can be displayed on the display unit 81 of the operator terminal 32 based on the vehicle information from the vehicle 34.

In this manner, the operator 31 can operate the vehicle 34 while viewing the display image with reduced influence of communication delay displayed on the display unit 81, and appropriately determining the positional relationship between the own vehicle position and surrounding objects for the vehicle 34.

As a result, the operability and safety of the remote operation using the remote operation system can be improved.

Own Vehicle Position Prediction Process

Next, with reference to the flowchart of Fig. 11, the own vehicle position prediction process is described.

At step S71, the current position prediction unit 74 acquires a steering angle S of the vehicle 34 in the vehicle information.

At step S72, the current position prediction unit 74 acquires a speed V of the vehicle 34 in the vehicle information.

At step S73, the current position prediction unit 74 acquires a delay time T acquired by the delay time acquiring unit 72.

At step S74, the current position prediction unit 74 acquires position information Pc in the vehicle information.

At step S75, the current position prediction unit 74 reads, for example, a calculation formula ($Pp = Pc + f(S, V, T)$) as the prediction method required for the prediction of the current position of the own vehicle and stored in the prediction method storage unit 91, and predicts the current position of the own vehicle based on the steering angle S, the speed V, the delay time T, and the position information Pc.

For example, when the steering angle is other than 0 degrees and a steering angle is taken in either direction, the current position of the vehicle 34 is predicted as illustrated in Fig. 12. Here, when the position of the vehicle 34 at the time of transmission of vehicle information is defined by the position information Pc (X, Z), and the steering angle S is taken toward the X direction, which is the right direction in the drawing, with respect to the Z direction, which is the upward direction in the drawing, and the vehicle moves at the speed V for the delay time T, X' and Z' at a predicted position Pp (X', Z') of the vehicle 34 at the current time are expressed by the following Equation (1) and Equation (2), respectively.

$$X' = R - R\cos(\omega T + \theta 0) \ [m]$$

$$\dots (1)$$

$$Z' = R\sin(\omega T + \theta 0) \ [m]$$

$$\dots (2)$$

Here, R is the turning radius of the vehicle 34, and expressed by the following Equation (3).

$$R = W/\sin S \ [m]$$

$$\dots (3)$$

Here, W is the wheelbase length of the vehicle 34, and S is the steering angle.

In addition, $\omega$ is the yaw rate of the vehicle 34, and expressed by the following Equation (4).

$$\omega = (1000\ V/3600)/R\ [rad/s]$$

$$\dots\ (4)$$

Further, when the steering angle is 0, the vehicle 34 linearly travels in the Z direction, which is the upward direction in Fig. 12, X' and Z' at the predicted position Pp (X', Z') are expressed by the following Equation (5) and Equation (6), respectively.

$$X' = 0\ [m]$$

$$\dots\ (5)$$

$$Z' = (1000\ V/3600)\ \times\ T\ [m]$$

$$\dots\ (6)$$

By the above-described computation, at the operator terminal 32, it is possible to predict the traveling distance of the vehicle 34 for the communication delay time based on the position information of the vehicle information, and estimate the current position.

Own Vehicle Position Display Method Determination Process

Next, with reference to the flowchart of Fig. 13, the own vehicle position display method determination process is described. As described above, in the display method for the own vehicle position, it is necessary to determine the two elements, the display viewpoint and the display information.

Specifically, at step S91, the display image creation unit 75 determines the display viewpoint by executing the display viewpoint determination process.

Note that the display viewpoint determination process will be specifically described later with reference to the flowchart of Fig. 14.

At step S92, the display image creation unit 75 determines the display information by executing the display information determination process.

Note that the display information determination process will be specifically described later with reference to the flowchart of Fig. 15.

When the display viewpoint and the display information are determined through the above-described processes, one of the bird's-eye view, third-person view, and first-person view is determined among the display viewpoints illustrated in Fig. 6, and further, one of the position only, vehicle body angle, and route is determined among the display information, thereby specifying the display method for the display image.

Display Viewpoint Determination Process

Next, with reference to the flowchart of Fig. 14, the display viewpoint determination process is described.

At step S111, the display image creation unit 75 determines whether the delay time T is not less than a predetermined time N1.

At step S111, when it is determined that the delay time T is not less than the predetermined time N1, the process proceeds to step S112.

At step S112, the display image creation unit 75 determines the display viewpoint to be the bird's-eye view.

At step S111, when it is determined that the delay time T is less than the predetermined time N1, the process proceeds to step S113.

At step S113, the display image creation unit 75 determines whether the delay time T is not less than a predetermined time N2 (< N1).

At step S113, when it is determined that the delay time T is not less than the predetermined time N2, the process proceeds to step S114.

At step S114, the display image creation unit 75 determines the display viewpoint to be the third-person view.

At step S113, when it is determined that the delay time T is less than the predetermined time N2, the process proceeds to step S115.

At step S115, the display image creation unit 75 determines whether there is the 3D map required for generating the first-person view.

At step S115, when it is determined that there is the 3D map required for generating the first-person view, the process proceeds to step S116.

At step S116, the display image creation unit 75 determines the display viewpoint to be the first-person view.

At step S115, when it is determined that there is no 3D map required for generating the first-person view, the process proceeds to step S114, and the display viewpoint is determined to be the third-person view.

Specifically, a display viewpoint with which a display image entailing a low processing load for generating the display image can be generated is selected in accordance with the length of the delay time T.

In this case, when the delay time T is longer than the predetermined time N1, which is the longest, the bird's-eye view, which entails the smallest processing load and causes less delay in generation of the display image, is selected.

In addition, when the delay time T is shorter than the predetermined time N1 but longer than the predetermined time N2 (< N1), that is, when the length has a margin enough to generate the bird's-eye view but not enough to generate the first-person view, the third-person view, which entails a greater processing load than the bird's-eye view but less than the first-person view display, is selected.

Further, when the delay time T is shorter than the predetermined time N2 with a margin enough to generate the first-person view and there is the 3D map information required for the first-person view, the first-person view, which entails a small visual recognition load on the operator 31, is selected.

It should be noted that in the case where there is no 3D map information required for the first-person view, the third-person view is selected even when the delay time T is shorter than the predetermined time N2 with a margin enough to generate the first-person view.

Through such a process, an appropriate display viewpoint can be determined in accordance with the delay time T, the margin of the processing load required for generating the display image, and presence/absence of the 3D map information.

Display Information Determination Process

Next, with reference to the flowchart of Fig. 15, the display information determination process is described.

At step S131, the display image creation unit 75 determines whether the number of surrounding vehicles of the own vehicle is equal to or smaller than a predetermined number based on an image captured by a camera included in the surrounding object information, for example.

At step S131, when it is determined that the number of surrounding vehicles is equal to or smaller than the predetermined number, the process proceeds to step S132.

At step S132, the display image creation unit 75 determines the route to the destination as the display information since there are few surrounding vehicles, and the visibility is not significantly reduced due to a plurality of displays, and there is little need to be aware of the surroundings.

At step S131, when it is determined that the number of surrounding vehicles is not equal to or smaller than the predetermined number, the process proceeds to step S133.

At step S133, the display image creation unit 75 determines whether the vehicle is traveling on a straight road based on an image captured by a camera included in the surrounding object information, for example.

At step S133, when it is determined that the vehicle is traveling on a straight road, the process proceeds to step S134.

At step S134, the display image creation unit 75 determines the position only as the display information since even when there are a relatively large number of surrounding vehicles, the travel paths of surrounding vehicles are unlikely to change significantly as long as the vehicle is traveling on a straight road.

At step S133, when it is determined that the vehicle is not traveling on a straight road, the process proceeds to step S135.

At step S135, the display image creation unit 75 determines the vehicle body angle as the display information since the vehicle is traveling on a nonstraight road and since it is also necessary to consider a significant change in the travel paths of surrounding vehicles and the like even when there are many surrounding vehicles.

Specifically, when the number of surrounding vehicles is small, the route is displayed since it is considered that the route will not be superimposed on surrounding vehicles even if it is displayed.

In addition, when there are many surrounding vehicles, whether the traveling road is straight is determined. In the case of a straight road, only the position is displayed since it is considered that the number of steering operations is small, whereas in other cases, the vehicle body angle is displayed to present information that facilitates the determination for the steering operation.

Surrounding Object Prediction Process

Next, with reference to the flowchart of Fig. 16, the surrounding object prediction process is described.

At step S151, the current position prediction unit 74 acquires the delay time T acquired by the delay time acquiring unit 72.

At step S152, the current position prediction unit 74 acquires the position information of the own vehicle based on the vehicle information.

At step S153, the current position prediction unit 74 acquires a sensing result making up the surrounding object information acquired by the sensor information acquiring unit 142 and included in the vehicle information with which the positions and distances of other vehicles and pedestrians around the vehicle 34 can be recognized.

At step S154, the current position prediction unit 74 individually recognizes the surrounding object of the own vehicle based on the sensing result making up surrounding object information, and calculates the position information of each surrounding object with the own vehicle as the origin.

At step S155, the current position prediction unit 74 sets an unprocessed surrounding object as a processing target object among the surrounding objects of the own vehicle.

At step S156, the current position prediction unit 74 accesses the position information accumulation unit 92 to determine whether the position information related to the processing target object for N frames has been accumulated.

At step S156, when it is determined that the position information related to the processing target object for N frames has been accumulated, the process proceeds to step S157.

At step S157, the current position prediction unit 74 acquires the position information related to the processing target object for N frames accumulated in the position information accumulation unit 92.

At step S158, based on the position information related to the processing target object for N frames, and the position information of the processing target object calculated based on the surrounding object information of the acquired vehicle information, the current position prediction unit 74 predicts the current position of the processing target object by calculating the movement amount corresponding to the amount of the delay time from a change in the time-series position information for N frames, and adding the movement amount to the position information of the processing target object calculated based on the surrounding object information of the acquired vehicle information.

At step S159, the current position prediction unit 74 accumulates the current position information serving as the prediction result of the processing target object in the position information accumulation unit 92 in association with information identifying the processing target object.

Note that at step S156, when it is determined that the position information related to the processing target object for N frames has not been accumulated, the processes of steps S157 and S158 are skipped.

Specifically, since in this case the current position of the processing target object cannot be predicted (estimated), the position information recognized from the surrounding object information is accumulated in the position information accumulation unit 92 as the current position information of the processing target object.

At step S160, the current position prediction unit 74 determines whether there is an unprocessed surrounding object, and when there is an unprocessed surrounding object, the process is returned to step S155.

Specifically, the processes of steps S155 to S160 are repeated until, for all surrounding objects, the current position is predicted and registered in the position information accumulation unit 92 in an updated manner, or the position information of the surrounding object information is registered in the position information accumulation unit 92.

Then, at step S160, the process is terminated when it is determined that the current positions of all surrounding objects have been predicted and registered in the position information accumulation unit 92 in an updated manner, or when it is determined that the position information of the surrounding object information has been registered in the position information accumulation unit 92.

Through the above-described processes, the current position of the surrounding object is predicted and sequentially accumulated, and the current position is predicted based on the accumulated information. Thus, the current position of the surrounding object can be predicted while enhancing the prediction accuracy as the prediction is repeated.

As a result, the current position of the surrounding object can be appropriately predicted.

Surrounding Object Display Method Determination Process

Next, with reference to the flowchart of Fig. 17, the surrounding object display method determination process is described.

At step S171, the display image creation unit 75 determines whether the delay time T is not less than a predetermined time M1.

At step S171, when it is determined that the delay time T is not less than the predetermined time M1, the process proceeds to step S172.

At step S172, the display image creation unit 75 sets the display method of the predicted position only as the surrounding object display method.

At step S171, when it is determined that the delay time T is less than the predetermined time M1, the process proceeds to step S173.

At step S173, the display image creation unit 75 determines whether the delay time T is not less than a predetermined time M2 (< M1).

At step S173, when it is determined that the delay time T is not less than the predetermined time M2, the process proceeds to step S174.

At step S174, the display image creation unit 75 sets the display method of the area display as the surrounding object display method.

At step S174, when it is determined that the delay time T is less than the predetermined time M2, the process proceeds to step S175.

At step S175, the display image creation unit 75 sets the display method of the superimposed display of the predicted position as the surrounding object display method.

Through the above-described processes, when the delay time T is longer than the longest predetermined time M1, the time enough to generate the display image cannot be ensured, and therefore the predicted position only, which entails the lightest processing load and enables high speed processing, is set.

In addition, when the delay time T is shorter than the predetermined time M1 but longer than the predetermined time M2 (< M1), with a margin enough to generate the display image of the display of predicted position only but not enough to generate the display image of the superimposed display of the predicted position, the area display is set.

Then, when the delay time T is shorter than the predetermined time M2, and a certain amount of time that is enough to generate the display image can be ensured, the superimposed display of the predicted position is set.

In this manner, the display method for surrounding objects can be appropriately switched for display in accordance with the processing time and load for generating the display image based on the delay time.

Modification of Bird's-Eye View

In the foregoing, as described above with reference to Fig. 6, an example in which the bird's-eye view is displayed as 2D data has been described.

However, the bird's-eye view may be displayed as an illustrated bird's-eye view or a camera image bird's-eye view as well as the 2D data as described above with reference to Fig. 6.

Fig. 18 illustrates examples of display images using an illustrated bird's-eye view and a camera image bird's-eye view as display viewpoints. The left section in Fig. 18 illustrates a display image BV1 as an example of the illustrated bird's-eye view, and the right section in Fig. 18 illustrates a display image BV2 as an example of the camera image bird's-eye view.

In Fig. 18, the display image BV1 composed of the illustrated bird's-eye view illustrates an example of a vehicle traveling downward in the drawing and a vehicle traveling upward in the drawing on the left and right sides with a lane therebetween. The display image BV1, which uses illustrations, can reduce the amount of data required and in turn the processing load for generating and drawing the display image, thereby shortening the processing time.

In Fig. 18, the display image BV2 composed of the camera image bird's-eye view is a bird's-eye view composed of a camera image representing the appearance of the own vehicle as viewed from directly above, that is, a so-called around-view monitor image.

Compared to the display image BV1 composed of the illustrated bird's-eye view, the display image BV2 composed of the camera image bird's-eye view entails a larger communication load as it requires communication of camera images capturing images of the surroundings of the vehicle 34 in the vehicle information, which may cause communication delay.

However, the display image BV2 composed of the camera image bird's-eye view is an image in which the own vehicle is always captured at a center position, and thus can reduce the amount of data for communication in comparison with the third-person view, with a smaller processing load for generating the display image in comparison with the third-person view, while shortening the processing time.

Display Viewpoint Determination Process Including Illustrated Bird's-Eye View and Camera Image Bird's-Eye View

Next, with reference to the flowchart of Fig. 19, the display viewpoint determination process including the illustrated bird's-eye view and the camera image bird's-eye view of Fig. 18 is described.

Note that the processes of steps S195 to S198 in the flowchart of Fig. 19 are the same as the processes of steps S113 to S116 described with reference to the flowchart of Fig. 14, and therefore the description thereof will be omitted.

Specifically, at step S191, the display image creation unit 75 determines whether the delay time T is not less than a predetermined time N0 (> T1).

At step S191, when it is determined that the delay time T is not less than the predetermined time N0 (> T1), the process proceeds to step S192.

At step S192, the display image creation unit 75 determines the display viewpoint to be the illustrated bird's-eye view.

At step S191, when it is determined that the delay time T is less than the predetermined time N0 (> T1), the process proceeds to step S193.

At step S193, the display image creation unit 75 determines whether the delay time T is not less than the predetermined time N1 (< N0).

At step S193, when it is determined that the delay time T is not less than the predetermined time N1 (< N0), the process proceeds to step S194.

At step S194, the display image creation unit 75 determines the display viewpoint to be the camera image bird's-eye view.

At step S193, when it is determined that the delay time T is less than the predetermined time N1 (< N0), the process proceeds to step S195, and either the third-person view or the first-person view is set.

Specifically, in accordance with the length of the delay time T, when the time is longer than the predetermined time N0 (> N1), the illustrated bird's-eye view is selected from among the bird's-eye views, whereas when the time is shorter than the predetermined time N0 (> N1) but longer than the predetermined time N1, the camera image bird's-eye view is selected from among the bird's-eye views.

Through such a process, the display viewpoint considering the visibility and processing time is appropriately set in accordance with the length of the delay time T.

Example of Surrounding Object Display Method Including Warning Information

Next, for example, when the delay time T is extremely long and the position estimation accuracy or the like is reduced so that remote operation can be regarded as unsafe, warning information presenting the specific delay time and/or instructing to stop nearby and terminate remote operation may be used as a surrounding information object display method as the display information.

For example, as illustrated in a display image WV1 of Fig. 20, the warning information may set a warning message display field WT on the display image. In the warning message display field WT of the display image WV1, a message "COMMUNICATION DELAY HAS OCCURRED. STOP" is indicated, and since the accuracy of the displayed information cannot be guaranteed due to the long delay time T, information is presented prompting the operator to stop the vehicle 34 and terminate remote operation.

In addition, a warning mark WC may be indicated as the warning information as illustrated in a display image WV2 of Fig. 20. The color and/or size of the warning mark WC changes in accordance with the length of the delay time.

Specifically, the warning mark WC may be displayed such that the degree of blue increases and the size decreases as the delay time T becomes shorter, for example. Further, the warning mark WC may change from blue to yellow and gradually increase in size as the delay time T becomes longer, for example. Further, when the delay time T is longer than a predetermined time and it is necessary to stop and terminate the remote operation, the warning mark WC may change from yellow to red and be enlarged in such a manner as to make it difficult to perform the remote operation while viewing the display image WV2, for example.

Further, as illustrated in a display image WV3 of Fig. 20, the warning information may be displayed by applying a semi-transparent hatching over the entire image to simulate a state of poor visibility and thereby reduce visibility. With such a warning display, a situation that makes operation difficult for the operator 31 may be created to encourage the operator to voluntarily reduce speed.

As described above, in accordance with the delay time, when the delay time is longer than a predetermined time and the prediction accuracy for the own vehicle position and surrounding objects is reduced such that remote monitoring and operation becomes unsafe, the safety can be ensured with the warning display of the display images WV1 to WV3 of Fig. 20.

Note that the warning display of the display images WV1 to WV3 of Fig. 20 is a superimposed display of information that enables recognition of a warning on the display image generated for at least the display of predicted position only and the like. Accordingly, when the warning display is selected as the display method for the surrounding vehicle, the surrounding objects are represented by the display method of the display of predicted position only, and then the warning message display field WT, the warning mark WC, and the hatching are applied, for example.

Surrounding Object Display Method Determination Process Including Warning Information

Next, with reference to the flowchart of Fig. 21, the surrounding object display method determination process including warning information is described.

Note that in the flowchart of Fig. 21, the processes of steps S213 to S217 are the same as the processes of steps S171 to S175 described above with reference to the flowchart of Fig. 17, and therefore the description thereof will be omitted.

Specifically, at step S211, the display image creation unit 75 determines whether the delay time T is not less than a predetermined time M0 (> M1).

At step S211, when it is determined that the delay time T is not less than the predetermined time M0, the process proceeds to step S212.

At step S2122, the display image creation unit 75 sets, as the surrounding object display method, a warning display of the display images WV1 to WV3 described above with reference to Fig. 20.

Note that at step S211, when it is determined that the delay time T is less than the predetermined time M0, the process proceeds to step S213, and one of the predicted position only, the area display, or the superimposed display of the predicted position is determined to be the surrounding object display method.

Through the above-described processes, by setting the predetermined time M0 as a time expected to cause interference with the remote operation for the delay time T, the warning display of the display images WV1 to WV3 of Fig. 20 is provided when the time is exceeded, and thus safety can be ensured.

Surrounding Object Display Method Determination Process Based on Conditions Other Than Delay Time

In the foregoing, an example in which the surrounding object display method is determined based on the delay time T has been described, but the surrounding object display method may be switched based on conditions other than delay time.

For example, when the delay time T is less than the predetermined time M1, the delay time is relatively short, and therefore the determination may be made based on whether the number of surrounding vehicles is less than a predetermined number instead of making a determination based on the delay time T, for example.

In this case, when the number of surrounding vehicles exceeds the predetermined number or when the road width is narrow, a large amount of information on surrounding vehicles will be presented on the display image, which may result in a complex display image and potentially reduced visibility, and therefore, the position only may be set as the surrounding object display method, for example.

On the other hand, when the number of surrounding vehicles is smaller than the predetermined number, the amount of information on surrounding vehicles presented on the display image will be small, which results in a clear and easily viewable display image and ensures visibility, and therefore, the area display may be set as the surrounding object display method. Specifically, the determination may be made based on visibility, instead of delay time.

Fig. 22 is a flowchart for describing a surrounding object display method determination process in which whether the number of surrounding vehicles is smaller than the predetermined number is determined when the delay time T is less than the predetermined time M1.

Note that in the flowchart of Fig. 22, the processes of steps S231, S232, S234 and S235 are the same as the processes of steps S171, S172, S174 and S175 described above with reference to the flowchart of Fig. 17, and therefore the description thereof will be omitted.

Specifically, in the flowchart of Fig. 22, at step S231, when the delay time T is less than the predetermined time M1, the process proceeds to step S233.

At step S233, the display image creation unit 75 determines whether the number of surrounding vehicles is smaller than a predetermined number based on the surrounding object information.

At step S233, when the number of surrounding vehicles is smaller than the predetermined number, the area display may be set as the surrounding object display method through the process of step S234.

At step S233, when the number of surrounding vehicles is greater than the predetermined number, the position only is set as the surrounding object display method through the process of step S235.

Through the above-described processes, the surrounding object display method can be selected in consideration of not only the delay time, but also the visibility depending on the number of surrounding vehicles, road width and the like.

(First) Application Example

In the foregoing, an example in which the display methods for the own vehicle and the surrounding vehicles are switched in accordance with the delay time has been described, but information related to traveling may also be presented.

In the bird's-eye view or third-person view, the predicted own position is clearly indicated, and as such attention tends to be focused on the own position. Therefore, information that does not require prediction of positional changes, such as traffic signals or traffic information, may be presented in the vicinity of the own position information, which tends to attract attention, thereby reducing eye movement and facilitating determination of the information.

For example, as illustrated in a display image WV11 on the left side in Fig. 23, the speed of the own vehicle and the information of the traffic signal ahead may be displayed using letters and marks.

In the display image WV11, the traveling speed of the own vehicle is presented on an own vehicle position mark WL indicating the position of the own vehicle in the lower right portion, and is presented as "52 km/h" in Fig. 23. In addition, on the upper right side of the mark WL, a traffic signal mark SG is presented, and in Fig. 23, the on state of the red light on the rightmost side is presented.

As illustrated in the display image WV11, the speed is presented at the own vehicle position mark WL where the line of sight is likely to concentrate, and in the vicinity of that position, the latest lighting information of traffic signal is presented. In this manner, the eye movement of the operator 31 can be reduced as much as possible, and the ease of determination of information can be increased.

In addition, as illustrated in a display image WV12 on the right side in Fig. 23, the color, color density, and size of an own vehicle position mark WS indicating the own vehicle position may be displayed to change in accordance with the speed, thereby enabling perception of the speed.

Specifically, in the display image WV12 of Fig. 23, the color, density, and size of the own vehicle position mark WS are displayed to change in accordance with the speed of the own vehicle, which makes it possible for the user to perceptually recognize the approximate traveling speed, even though the precise speed is unknown.

In addition to the color, density, and size, the shape of the own vehicle position mark WS may be changed in accordance with the speed of the own vehicle.

More specifically, when the speed of the own vehicle is close to the legal speed, the own vehicle position mark WS may be displayed with high transparency and a small size. Specifically, since the current speed is the legal speed and there is no need to make the driver consciously aware of the current speed, it is possible to use a display that allows the driver to concentrate more on driving by increasing the visibility of surrounding information.

In addition, when the speed of the own vehicle exceeds the legal speed, the own vehicle position mark WS may be displayed with low transparency and a large size. That is, since the current speed exceeds the legal speed, it is possible to use a display that intentionally makes the surrounding information somewhat less visually recognizable so as to make the driver consciously aware of the current speed and encourage deceleration.

In any case, it is possible to allow intuitive recognition of the speed. In the case of remote operation, when the speed is exceeded, it is expected that deceleration will be naturally encouraged by reducing the visibility of surrounding information compared to normal conditions.

(Second) Application Example

In the foregoing, an example in which the predicted position of the surrounding vehicle is presented in consideration of the communication delay time has been described, but it is also possible to set the risk levels corresponding to the types and behaviors of surrounding objects, and apply offsets corresponding to the risk levels to the display.

The type of surrounding object may be determined using information in the position information accumulation unit 92. For example, as illustrated on the left side in Fig. 24, "children/elderly persons" may be assigned a risk level of 10, "pedestrians" a risk level of 9, "bicycles" a risk level of 8, "motorcycles" a risk level of 7, "light vehicles" a risk level of 6, "passenger vehicles" a risk level of 5, and "trucks" a risk level of 4, for example. The risk level indicates that the greater the numerical value, the higher the degree of danger.

In addition, as illustrated on the right side in Fig. 24, regarding the risk level corresponding to the type of behavior, behaviors such as "narrow distance from another vehicle" and "lane change without signaling" may be assigned a "high" risk level, while behaviors such as "frequent lane change" and "sudden or high-speed acceleration/deceleration" may be assigned a "medium" risk level, for example.

For example, consider a case where the risk level is set in accordance with the type of vehicle and the type of behavior as illustrated in Fig. 24, and a range in which the target object may exist is drawn as a box-shaped mark as illustrated in a display example (2-1) in Fig. 7 for the surrounding object.

Here, for example, in a normal display state where no offset corresponding to the risk level is considered, the surrounding vehicle and the own vehicle are displayed as a mark MB and a mark MC, respectively, as illustrated in a display image OFSOFF on the left side in Fig. 25. Here, the distance between marks MB and MC is represented by the distance between endpoints Pb and Pc.

On the other hand, in a display state where an offset corresponding to the risk level is considered, the surrounding vehicle and the own vehicle are displayed as a mark MB' and the mark MC, respectively, as illustrated in a display image OFSON on the right side in Fig. 25. As illustrated in the display image OFSON, the mark MB' is set at a position offset from the endpoint Pb of the mark MB such that the endpoint Pb' is closer to the mark MC of the own vehicle by a width Da corresponding to the risk level of the type.

With such a display, the operator 31 recognizes that a surrounding object, for which a risk level has been set, is located closer than the predicted positional relationship, and thus a heightened sense of alertness can be promoted.

In addition, by configuring the offset width Da based not only on the risk level set according to the type of object but also on the magnitude corresponding to the risk level set according to behavior, the operator 31 can recognize a sense of alertness corresponding to the risk level simply by viewing the distance between marks MB' and MC.

Further, the visibility of the display may be increased in accordance with the risk level. For example, objects with higher risk levels may be displayed in darker colors.

In a display image WV31 on the left side in Fig. 26, for example, it is assumed that a mark MB1 representing a surrounding object as a motorcycle is displayed on the left side in the drawing, and a mark MC1 representing a surrounding object as a passenger vehicle is displayed on the right side in the drawing.

In Fig. 24 described above, since the motorcycle has a risk level of 7 and the passenger vehicle has a risk level of 5, the marks MB1 and MC1 in the display image WV31 are represented with densities corresponding to their respective risk levels. When setting the density based on the risk level, the risk level classified by behavior may be taken into account in addition to the risk level set based on the type.

In addition, for example, objects with lower risk levels may be displayed with reduced resolution so that surrounding objects with higher risk levels can be recognized in greater detail.

For example, in a display image WV32, which is the second from the left in Fig. 26, a mark MB2 representing a surrounding object as a motorcycle is displayed on the left side in the drawing, and a mark MC2 representing a surrounding object as a passenger vehicle is displayed on the right side in the drawing. In Fig. 26, the marks MB2 and MC2 are represented with resolutions set in Fig. 24, corresponding to the risk level of 7 of the motorcycle and the risk level of 5 of the passenger vehicle, respectively. Accordingly, since the motorcycle has a higher risk level than a risk level of the passenger vehicle, the mark MC2 of the passenger vehicle has a lower resolution than the mark MB2 of the motorcycle.

Further, objects with high risk levels may be displayed by enclosing them within a border, for example.

For example, in a display image WV33, which is the third from the left in Fig. 26, a mark MB3 representing a surrounding object as a motorcycle is displayed on the left side in the drawing, and a mark MC3 representing a surrounding object as a passenger vehicle is displayed on the right side in the drawing. In Fig. 24, since the motorcycle has a risk level of 7 and the passenger vehicle has a risk level of 5, for example, the motorcycle having a risk level greater than 6 is enclosed within a border as indicated by the mark MB3, whereas the mark MC3 of the passenger vehicle having a risk level lower than 6 is not enclosed within a border.

Further, objects with high risk levels may be displayed with emphasized outlines, for example.

For example, in a display image WV34, which is the fourth from the left in Fig. 26, a mark MB4 representing a surrounding object as a motorcycle is displayed on the left side in the drawing, and a mark MC4 representing a surrounding object as a passenger vehicle is displayed on the right side in the drawing. In Fig. 24, since the motorcycle has a risk level of 7 and the passenger vehicle has a risk level of 5, for example, the motorcycle having a risk level greater than 6 is displayed with an emphasized outline enclosed by a thick line as indicated by the mark MB4, whereas the mark MC3 of the passenger vehicle having a risk level lower than 6 having a risk level lower than 6 is not displayed with emphasis.

Further, objects with higher risk levels may be displayed with a wider mark width, for example.

For example, in a display image WV35 on the right side in Fig. 26, a mark MB5 representing a surrounding object as a motorcycle is displayed on the left side in the drawing, and a mark MC5 representing a surrounding object as a passenger vehicle is displayed on the right side in the drawing. In Fig. 24, since the motorcycle has a risk level of 7 and the passenger vehicle has a risk level of 5, the marks MB5 and MC5 are displayed with widths corresponding to their respective risk levels.

Note that the width of the mark is not simply set according to the risk level, but rather the width is set wider in accordance with the risk level based on a default width predefined for each mark. Accordingly, in Fig. 26, although the width of the mark MB5 is smaller than the width of the mark MC5, this does not indicate that the risk level of the motorcycle represented by the mark MB5 is lower than the risk level of the passenger vehicle represented by mark MC5. This is because the marks MB5 and MC5 are marks modeling a motorcycle and a passenger vehicle, respectively, and the default width of the mark MB5 is smaller than that of the mark MC5.

Therefore, the display image WV35 on the right side in Fig. 26 represents that the width of the mark MB5 is set wider than its default size by the amount corresponding to the risk level. On the other hand, it represents that the risk level of the mark MC5 is lower than the threshold level 6, and therefore its width remains at the default size.

3. Second Embodiment

In the foregoing, a configuration example of the remote operation system 11 in which the operator terminal 32 and the vehicle 34 transmit and receive vehicle information and steering information through the network 33 has been described.

However, by utilizing V2V communication, a specific vehicle 34 may collect vehicle information of surrounding vehicles through inter-vehicle communication with the surrounding vehicles, and transmit, on behalf of the vehicles to the operator terminal 32, vehicle information of a plurality of vehicles 34 to the operator terminal 32.

Fig. 27 illustrates a configuration example of a remote operation system 11' utilizing V2V communication. Note that in Fig. 27, the configurations having the same functions as the configurations of the remote operation system 11 of Fig. 2 are denoted with the same reference numerals, and description thereof will be omitted as necessary.

The above-described vehicle 34 has a function of achieving V2V communication. In this manner, in Fig. 27, when, through inter-vehicle communication with the vehicles 34-2 and 34-m, the vehicle 34-1 acquires each vehicle information, it may transmit that information, together with the vehicle information of its own vehicle, to the operator terminals 32-1 to 32-n through the network 33, for example.

In the operator terminals 32-1 to 32-n, any of them receiving the vehicle information of the plurality of vehicles 34 may distribute it to other operator terminals 32 so as to perform decentralized processing, or one operator terminal 32 may use the vehicle information of the plurality of vehicles 34 so as to perform remote operation of the plurality of vehicles 34.

Remote Operation Control Process (V2V)

Next, with reference to the flowchart of Fig. 28, a remote operation control process performed by the remote operation system 11' utilizing the V2V communication of Fig. 27 is described.

Note that the processes of steps S292 to S300 by the operator terminal 32 are the same as the processes of steps S52 to S60 of the flowchart of Fig. 10, and therefore the description thereof will be omitted. In addition, the processes of steps S255 to S257 and the processes of steps S277 to S279 are the same as the processes of steps S35 to S37 of the flowchart of Fig. 10, and therefore the description thereof will be omitted.

In addition, except for the process of transmitting and receiving vehicle information, the operations are basically the same as those of the process described with reference to the flowchart of Fig. 10, and therefore description for the operations other than the process of transmitting and receiving vehicle information will be omitted as necessary.

Further, in the flowchart of Fig. 28, the flowchart on the left side is the process of the vehicles 34-2 and 34-m as surrounding vehicles as viewed from the vehicle 34-1 in Fig. 27, the flowchart at the center is the process of the vehicle 34-1, and the right side is the process of the operator terminal 32.

Specifically, at steps S251 to S254, the sensor information acquiring unit 142 of the vehicles 34-2 and 34-m as surrounding vehicles acquires surrounding object information such as a camera image capturing the surroundings, a distance image with which the distance from the surrounding object can be recognized and the like, position information of the own vehicle, and information on the steering angle (steering angular degrees) and speed of the own vehicle detected by the vehicle sensor 117.

Then, at step S254, the vehicle information communication unit 143 of the vehicles 34-2 and 34-m as surrounding vehicles forms vehicle information by collecting position information of the own vehicle acquired from the position information acquiring unit 114, surrounding object information acquired by the sensor information acquiring unit 142 and composed of a sensing result with which the positions and distances of other vehicles and pedestrians around the vehicle 34 can be recognized, and information on the steering angle (steering angular degrees) and speed of the own vehicle detected by the vehicle sensor 117, and controls the communication unit 112 to transmit it to the vehicle 34-1 through inter-vehicle communication.

At steps S271 to S273, the sensor information acquiring unit 142 of the vehicle 34-1 acquires surrounding object information such as a camera image capturing the surroundings, a distance image with which the distance from the surrounding object can be recognized and the like, position information of the own vehicle, and information on the steering angle (steering angular degrees) and speed of the own vehicle detected by the vehicle sensor 117.

Then, at step S274, the vehicle information communication unit 143 of the vehicle 34-1 forms vehicle information by collecting position information of the own vehicle acquired from the position information acquiring unit 114, surrounding object information acquired by the sensor information acquiring unit 142 and composed of a sensing result with which the positions and distances of other vehicles and pedestrians around the vehicle 34 can be recognized, and information on the steering angle (steering angular degrees) and speed of the own vehicle detected by the vehicle sensor 117.

At step S275, the vehicle information communication unit 143 of the vehicle 34-1 controls the communication unit 112 to receive each vehicle information transmitted from the vehicles 34-2 and 34-m through inter-vehicle communication.

At step S276, the vehicle information communication unit 143 of the vehicle 34-1 controls the communication unit 112 to transmit both the vehicle information of its own vehicle and the vehicle information of the vehicles 34-2 and 34-m as surrounding vehicles to the operator terminal 32.

At step S291, the vehicle information acquiring unit 73 controls the communication unit 55 to acquire the vehicle information of the vehicles 34-1, 34-2 and 34-m transmitted from the vehicle 34-1.

At this time, the vehicle information acquiring unit 73 associates time information of the timing when the vehicle information of the vehicles 34-1, 34-2 and 34-m has been acquired, with the vehicle information.

Through subsequent processes, steering information is individually generated based on the vehicle information of the vehicles 34-1, 34-2 and 34-m, and individually supplied.

Through the above-described processes, communication load of the operator terminal 32 and the vehicle 34 is reduced, and thus overall communication delay can be reduced.

4. Modification of Second Embodiment

In the foregoing, a configuration example of the remote operation system 11' in which the vehicle information and steering information of the operator terminal 32 and the vehicle 34 are transmitted and received by utilizing V2V communication has been described.

However, vehicle information may be transmitted to the operator terminal 32 through communication with apparatuses other than the vehicle 34 by utilizing V2X communication.

Fig. 29 illustrates a configuration example of a remote operation system 11'' utilizing V2X communication. Note that in Fig. 29, the configurations having the same functions as the configurations of the remote operation system 11 of Fig. 2 and the remote operation system 11' of Fig. 27 are denoted with the same reference numerals, and description thereof will be omitted as necessary.

The remote operation system 11'' of Fig. 29 is different from the remote operation system 11 of Fig. 2 and the remote operation system 11' of Fig. 27 in that it includes a traffic information cloud server 201 and on-road communication equipment 202.

The traffic information cloud server 201, which is a cloud server that aggregates information on the traveling vehicle 34 and the infrastructure on the road, acquires vehicle information from the vehicle 34, and supplies it to the operator terminal 32.

The on-road communication equipment 202 is an apparatus that acquires information on on-road facilities such as traffic signals, and transmits the on-road facility information to the traffic information cloud server 201 through the network 33.

The traffic information cloud server 201 supplies the vehicle information and the on-road facility information to the operator terminal 32.

The operator terminal 32 acquires the vehicle information of the vehicle 34 supplied through the traffic information cloud server 201, and supplies the steering information. At this time, by also acquiring the corresponding on-road facility information, it is possible to recognize the control state of traffic signals, the operating state of railroad crossings, and the like, and utilize such information for remote control, for example.

Remote Operation Control Process (V2X)

Next, with reference to the flowchart of Fig. 30, a remote operation control process by the remote operation system 11'' utilizing the V2X communication of Fig. 29 is described.

Note that the processes of steps S352 to S360 by the operator terminal 32 are the same as the processes of steps S52 to S60 in the flowchart of Fig. 10, and therefore the description thereof will be omitted. In addition, the processes of steps S315 to S317 are the same as the processes of steps S35 to S37 in the flowchart of Fig. 10, and therefore the description thereof will be omitted.

In addition, except for the process of transmitting and receiving vehicle information, the operations are basically the same as those of the process described with reference to the flowchart of Fig. 10, and therefore description for the operations other than the process of transmitting and receiving vehicle information will be omitted as necessary.

Further, in the flowchart of Fig. 30, the flowchart on the left side is the process of the vehicle 34 in Fig. 27, the flowchart at the center is the process of the traffic information cloud server 201, and the right side is the process of the operator terminal 32.

Specifically, at steps S311 to S313, the sensor information acquiring unit 142 of the vehicle 34 acquires surrounding object information such as a camera image capturing the surroundings, a distance image with which the distance from the surrounding object can be recognized and the like, position information of the own vehicle, and information on the steering angle (steering angular degrees) and speed of the own vehicle detected by the vehicle sensor 117.

Then, at step S314, the vehicle information communication unit 143 of the vehicle 34 forms vehicle information by collecting position information of the own vehicle acquired from the position information acquiring unit 114, surrounding object information acquired by the sensor information acquiring unit 142 and composed of a sensing result with which the positions and distances of other vehicles and pedestrians around the vehicle 34 can be recognized, and information on the steering angle (steering angular degrees) and speed of the own vehicle detected by the vehicle sensor 117, and controls the communication unit 112 to transmit it to the traffic information cloud server 201 through V2X communication.

At step S331, the traffic information cloud server 201 acquires the vehicle information transmitted from the vehicle 34, and stores it in an associated manner for each vehicle 34.

At step S332, the traffic information cloud server 201 acquires the on-road facility information transmitted from the on-road communication equipment 202.

At step S333, the traffic information cloud server 201 transmits vehicle information and the on-road facility information to the operator terminal 32.

At step S351, the vehicle information acquiring unit 73 controls the communication unit 55 to receive the vehicle information and the on-road facility information.

Through subsequent processes, the steering information is individually generated and supplied based on the vehicle information of the vehicle 34.

Through the above-described processes, communication load of the operator terminal 32 and the vehicle 34 is reduced, and thus overall communication delay can be reduced.

Application Examples Using V2X Communication

In addition, using V2X communication makes it possible to acquire vehicle information between vehicles 34 that cannot perform inter-vehicle communication, as well as to acquire on-road facility information from the on-road communication equipment 202.

In this manner, it is possible to acquire information on surrounding vehicles located in blind spots at traffic signals or intersections.

In view of this, it is possible to avoid sudden braking or collision by utilizing the above-mentioned information and issuing a warning to apply the brakes when it is predicted that the traffic light will change to red just before passing or when a collision with a surrounding vehicle is predicted.

That is, for example, as illustrated in a display image WV51 on the left side in Fig. 31, it is possible to provide a warning section at the upper section to present a display such as "SIGNAL WILL TURN RED IN 4 [s]. START DECELERATION".

In addition, for example, as illustrated in a display image WV52 on the right side in Fig. 31, it is possible to provide a warning section at the upper section to present a display such as "VEHICLE IN INTERSECTION. START DECELERATION".

In any case, it is possible to avoid sudden braking.

In addition, since information on surrounding vehicles acquired through V2X communication can be added to the display using prediction results of surrounding objects, it is possible to enable proper recognition of the traveling direction of the surrounding vehicle.

For example, in the case where a mark WB11 representing a surrounding vehicle as a motorcycle is displayed as illustrated in Fig. 32, it is possible to enable proper recognition of the traveling direction of the surrounding vehicle by displaying an animation in which triangular marks WC11 to WC13 are disposed along the traveling direction based on the predicted positions of the surrounding vehicle, and colors are changed in the order of the triangular marks WC11 to WC13 in a time-series manner from left to right in the drawing as illustrated in display images WV61 to WV63.

In addition, since turn signal blinking information from the surrounding vehicle indicated by the mark WB11 can be acquired at the traffic information cloud server 201 by utilizing V2X communication, it may be supplied to the operator terminal 32 through the traffic information cloud server 201 such that the blinking direction of the turn signal is reflected on the display image displayed on the operator terminal 32.

5. Example of Execution Using Software

Incidentally, the above-described series of processing can be executed by hardware, but they can also be executed by software. When the series of processing is executed by software, programs that configure the software are installed from a recording medium into a computer built into dedicated hardware, or into, for example, a general-purpose computer that can execute various functions by installing various programs.

Fig. 33 illustrates a configuration example of a general-purpose computer. The computer has a built-in central processing unit (CPU) 1001. An input/output interface 1005 is connected to the CPU 1001 via a bus 1004. A read only memory (ROM) 1002 and a random access memory (RAM) 1003 are connected to the bus 1004.

An input unit 1006 configured with input devices such as a keyboard and a mouse through which a user inputs operation commands, an output unit 1007 which outputs a processing operation screen and an image of a processing result to a display device, a storage unit 1008 configured with a hard disk drive or the like for storing programs and various pieces of data, and a communication unit 1009, configured with a local area network (LAN) adapter or the like, for executing a communication processing via a network represented by the Internet are connected to an input/output interface 1005. In addition, a drive 1010 for reading and writing data from and to a removable storage medium 1011 such as a magnetic disk (including a flexible disk), an optical disk (including a compact disc-read only memory (CD-ROM), and a digital versatile disc (DVD), a magneto-optical disk (including a mini disc (MD)), or a semiconductor memory is connected.

The CPU 1001 executes various processing in accordance with a programs stored in the ROM 1002 or a program that is read out from the removable storage medium 1011, such as a magnetic disk, an optical disk, a magneto-optical disk, or a semiconductor memory, installed in the storage unit 1008, and loaded into the RAM 1003 from the storage unit 1008. The RAM 1003 also appropriately stores data necessary for the CPU 1001 to execute various processes.

In the computer configured as described above, the CPU 1001 loads the program stored in the storage unit 1008, for example, into the RAM 1003 via the input/output interface 1005 and the bus 1004, and executes the program, thereby performing the above-mentioned series of processing.

The program executed by the computer (CPU 1001) can be recorded, for example, on the removable storage medium 1011 which is a package medium or the like, and provided. The program can also be provided via a wired or wireless transmission medium, such as a local area network, the Internet, or digital satellite broadcasting.

In the computer, the program can be installed in the storage unit 1008 via the input/output interface 1005 by inserting the removable storage medium 1011 into the drive 1010. The program can also be received by the communication unit 1009 via a wired or wireless transmission medium and installed in the storage unit 1008. Other than the above manners, the program can be pre-installed in the ROM 1002 or the storage unit 1008.

Note that the program executed by the computer may be a program for executing the processing in time series in the order described in the present specification, or may be a program for executing the processing in parallel or at a necessary timing such as when a call is performed.

Note that the CPU 1001 in Fig. 33 implements the function of the control unit 51 of the operator terminal 32 of Fig. 3.

Note that in the present specification, a system means a set of a plurality of components (devices, modules (parts), and the like), and it does not matter whether all the components are in the same housing. Therefore, the system refers to both a plurality of devices housed in separate housings and connected via a network, and one device in which a plurality of modules are housed in one housing.

Furthermore, embodiments of the present disclosure are not limited to the above-described embodiments, and various modifications can be made without departing from the scope of the present disclosure.

For example, the present disclosure can adopt a configuration of cloud computing in which a single function is shared and processed jointly by a plurality of devices via a network.

Further, each step described in the above-described flowchart can be performed by one apparatus or can be shared and executed by a plurality of apparatuses.

Further, when a single step includes multiple processes, the multiple processes included in that single step can be executed by a single device, or can be shared and executed by multiple devices.

The present disclosure may also be configured as follows.

<1> A signal processing device including a prediction unit configured to predict a current position of a surrounding object considering a delay time of a communication with a mobile body based on information on the surrounding object received through the communication, the surrounding object being an object that is present in a region around the mobile body.

<2> The signal processing device according to <1>, further including an accumulation unit configured to accumulate a prediction result of the current position of the surrounding object in a time-series manner, in which the prediction unit predicts the current position of the surrounding object based on the prediction result accumulated in the accumulation unit.

<3> The signal processing device according to <2>, in which the prediction unit predicts the current position of the surrounding object by calculating a position of the surrounding object at a time point when the information on the surrounding object is generated based on the information on the surrounding object, calculating a movement amount for the delay time from a change in the prediction result accumulated in the time-series manner in the accumulation unit, and adding the movement amount to the position of the surrounding object at the time point when the information on the surrounding object is generated.

<4> The signal processing device according to <1>, further including a display image creation unit configured to create a display image displaying the surrounding object based on the current position predicted.

<5> The signal processing device according to <4>, in which the display image creation unit creates the display image by switching a surrounding object display method based on the delay time, the surrounding object display method being a display method for the surrounding object.

<6> The signal processing device according to <5>, in which based on the delay time, the display image creation unit creates the display image by switching:

a first surrounding object display method of displaying only the current position of the surrounding object that is displayed based on the information on the surrounding object,
a second surrounding object display method of displaying an area including the current position of the surrounding object displayed based on the information on the surrounding object, and
a third surrounding object display method of displaying in a superimposed manner the current position and the surrounding object displayed based on the information on the surrounding object.

<7> The signal processing device according to <6>, in which

when the delay time is longer than a first predetermined time, the display image creation unit generates the display image by the first surrounding object display method, and
when the delay time is shorter than the first predetermined time, the display image creation unit creates the display image by switching the second surrounding object display method and the third surrounding object display method.

<8> The signal processing device according to <7>, in which

in a case where the delay time is shorter than the first predetermined time,
when the delay time is shorter than the first predetermined time and longer than a second predetermined time, the display image creation unit creates the display image by the second surrounding object display method, and
when the delay time is shorter than the first predetermined time and shorter than the second predetermined time, the display image creation unit creates the display image by the third surrounding object display method.

<9> The signal processing device according to <7>, in which

in a case where the delay time is shorter than the first predetermined time,
when the number of the surrounding objects is less than a predetermined number, the display image creation unit creates the display image by the second surrounding object display method, and
when the number of the surrounding objects is greater than the predetermined number, the display image creation unit creates the display image by the third surrounding object display method.

<10> The signal processing device according to <6>, in which based on the delay time, the display image creation unit creates the display image by switching a fourth surrounding object display method in addition to the first surrounding object display method, the second surrounding object display method, and the third surrounding object display method, the fourth surrounding object display method being a method of displaying warning information that warns that a prediction accuracy of the current position is lower than a predetermined value.
<11> The signal processing device according to <10>, in which

when the delay time is longer than a first predetermined time, the display image creation unit generates the display image by the first surrounding object display method,
when the delay time is shorter than the first predetermined time, the display image creation unit creates the display image by switching the second surrounding object display method and the third surrounding object display method, and
when the delay time is longer than the first predetermined time and longer than a fourth predetermined time, the display image creation unit generates the display image by the fourth surrounding object display method.

<12> The signal processing device according to <6>, in which

the prediction unit predicts the current position of the mobile body considering the delay time based on position information and steering information of the mobile body received through the communication with the mobile body, and
when creating the display image by the second surrounding object display method, the display image creation unit displays the area in an offset manner by bringing the area closer toward the current position of the mobile body in accordance with a risk level of the surrounding object.

<13> The signal processing device according to <12>, in which the risk level of the surrounding object is set in accordance with a type and behavior of the surrounding object.
<14> The signal processing device according to <4>, in which

the prediction unit predicts the current position of the mobile body considering the delay time of the communication based on position information and steering information of the mobile body received through the communication with the mobile body, and
the display image creation unit generates the display image by switching a mobile body display method in accordance with the delay time for the mobile body and the surrounding object by using the current position of the mobile body and the current position of the surrounding object, the mobile body display method being a display method for the mobile body.

<15> The signal processing device according to <14>, in which

the mobile body display method includes a display viewpoint and display information, and
the display image creation unit generates the display image by switching the display viewpoint based on the delay time.

<16> The signal processing device according to <15>, in which

the display viewpoint includes a bird's-eye view, a third-person view, and a first-person view,
when the delay time is longer than a first predetermined time, the display image creation unit generates the display image by switching the display viewpoint to the bird's-eye view,
when the delay time is shorter than the first predetermined time and longer than a second predetermined time, the display image creation unit generates the display image by switching the display viewpoint to the third-person view, and
when the delay time is shorter than the second predetermined time, the display image creation unit generates the display image by switching the display viewpoint to the first-person view.

<17> The signal processing device according to <16>, in which

the first-person view is a computer graphics image generated based on 3D map information, and
in a case where the delay time is shorter than the second predetermined time, when the 3D map information has been acquired, the display image creation unit generates the display image by switching the display viewpoint to the first-person view, whereas when the 3D map information has not been acquired, the display image creation unit generates the display image by switching the display viewpoint to the third-person view.

<18> The signal processing device according to <16>, in which

the bird's-eye view includes an illustrated bird's-eye view and a camera image bird's-eye view,
when the delay time is longer than the first predetermined time and longer than a third predetermined time, the display image creation unit generates the display image by switching the display viewpoint to the illustrated bird's-eye view, and
when the delay time is shorter than the third predetermined time and longer than the first predetermined time, the display image creation unit generates the display image by switching the display viewpoint to the camera image bird's-eye view.

<19> A signal processing method including predicting a current position of a surrounding object considering a delay time of a communication with a mobile body based on information on the surrounding object received through the communication, the surrounding object being an object that is present in a region around the mobile body.
<20> A signal processing system including:
a signal processing device including:

a prediction unit configured to predict a current position of a surrounding object considering a delay time of a communication with a mobile body based on information on the surrounding object received through the communication, the surrounding object being an object that is present in a region around the mobile body, and
a display image creation unit configured to create a display image indicating information on the surrounding object based on the current position predicted; and
a display device including a display unit configured to display the display image.

Reference Signs List

11, 11', 11'' Remote Operation System, 31, 31-1 to 31-n Operator, 32, 32-1 to 32-n Operator Terminal, 33 Network, 34-1 to 34-m Vehicle, 55 Communication Unit, 71 Steering Information Acquiring Unit, 72 Delay Time Acquiring Unit, 73 Vehicle Information Acquiring Unit, 74 Current Position Prediction Unit, 75 Display Image Creation Unit, 76 Steering Information Supply Unit, 81 Display Unit, 91 Prediction Method Storage Unit, 92 Position Information Accumulation Unit, 112 Communication Unit, 115 External Recognition Sensor, 131 Camera, 132 Radar, 133 LiDAR, 134 Ultrasonic Sensor, 141 Steering Control Unit, 142 Sensor Information Acquiring Unit, 143 Vehicle Information Communication Unit, 201 Traffic Information Cloud Server, 202 On-Road Communication Equipment

**Claims**

1. A signal processing device comprising a prediction unit configured to predict a current position of a surrounding object considering a delay time of a communication with a mobile body based on information on the surrounding object received through the communication, the surrounding object being an object that is present in a region around the mobile body.

2. The signal processing device according to claim 1, further comprising an accumulation unit configured to accumulate a prediction result of the current position of the surrounding object in a time-series manner, wherein
the prediction unit predicts the current position of the surrounding object based on the prediction result accumulated in the accumulation unit.

3. The signal processing device according to claim 2, wherein the prediction unit predicts the current position of the surrounding object by calculating a position of the surrounding object at a time point when the information on the surrounding object is generated based on the information on the surrounding object, calculating a movement amount for the delay time from a change in the prediction result accumulated in the time-series manner in the accumulation unit, and adding the movement amount to the position of the surrounding object at the time point when the information on the surrounding object is generated.

4. The signal processing device according to claim 1, further comprising a display image creation unit configured to create a display image displaying the surrounding object based on the current position predicted.

5. The signal processing device according to claim 4, wherein the display image creation unit creates the display image by switching a surrounding object display method based on the delay time, the surrounding object display method being a display method for the surrounding object.

6. The signal processing device according to claim 5, wherein based on the delay time, the display image creation unit creates the display image by switching:

a first surrounding object display method of displaying only the current position of the surrounding object that is displayed based on the information on the surrounding object,
a second surrounding object display method of displaying an area including the current position of the surrounding object displayed based on the information on the surrounding object, and
a third surrounding object display method of displaying in a superimposed manner the current position and the surrounding object displayed based on the information on the surrounding object.

7. The signal processing device according to claim 6, wherein

when the delay time is longer than a first predetermined time, the display image creation unit generates the display image by the first surrounding object display method, and
when the delay time is shorter than the first predetermined time, the display image creation unit creates the display image by switching the second surrounding object display method and the third surrounding object display method.

8. The signal processing device according to claim 7, wherein

in a case where the delay time is shorter than the first predetermined time,
when the delay time is shorter than the first predetermined time and longer than a second predetermined time, the display image creation unit creates the display image by the second surrounding object display method, and
when the delay time is shorter than the first predetermined time and shorter than the second predetermined time, the display image creation unit creates the display image by the third surrounding object display method.

9. The signal processing device according to claim 7,

wherein

in a case where the delay time is shorter than the first predetermined time,
when the number of the surrounding objects is less than a predetermined number, the display image creation unit creates the display image by the second surrounding object display method, and
when the number of the surrounding objects is greater than the predetermined number, the display image creation unit creates the display image by the third surrounding object display method.

10. The signal processing device according to claim 6, wherein based on the delay time, the display image creation unit creates the display image by switching a fourth surrounding object display method in addition to the first surrounding object display method, the second surrounding object display method, and the third surrounding object display method, the fourth surrounding object display method being a method of displaying warning information that warns that a prediction accuracy of the current position is lower than a predetermined value.

11. The signal processing device according to claim 10, wherein

when the delay time is longer than a first predetermined time, the display image creation unit generates the display image by the first surrounding object display method,
when the delay time is shorter than the first predetermined time, the display image creation unit creates the display image by switching the second surrounding object display method and the third surrounding object display method, and
when the delay time is longer than the first predetermined time and longer than a fourth predetermined time, the display image creation unit generates the display image by the fourth surrounding object display method.

12. The signal processing device according to claim 6, wherein

the prediction unit predicts the current position of the mobile body considering the delay time based on position information and steering information of the mobile body received through the communication with the mobile body, and
when creating the display image by the second surrounding object display method, the display image creation unit displays the area in an offset manner by bringing the area closer toward the current position of the mobile body in accordance with a risk level of the surrounding object.

13. The signal processing device according to claim 12, wherein the risk level of the surrounding object is set in accordance with a type and behavior of the surrounding object.

14. The signal processing device according to claim 4, wherein

the prediction unit predicts the current position of the mobile body considering the delay time of the communication based on position information and steering information of the mobile body received through the communication with the mobile body, and
the display image creation unit generates the display image by switching a mobile body display method in accordance with the delay time for the mobile body and the surrounding object by using the current position of the mobile body and the current position of the surrounding object, the mobile body display method being a display method for the mobile body.

15. The signal processing device according to claim 14, wherein

the mobile body display method includes a display viewpoint and display information, and
the display image creation unit generates the display image by switching the display viewpoint based on the delay time.

16. The signal processing device according to claim 15, wherein

the display viewpoint includes a bird's-eye view, a third-person view, and a first-person view,
when the delay time is longer than a first predetermined time, the display image creation unit generates the display image by switching the display viewpoint to the bird's-eye view,
when the delay time is shorter than the first predetermined time and longer than a second predetermined time, the display image creation unit generates the display image by switching the display viewpoint to the third-person view, and

when the delay time is shorter than the second predetermined time, the display image creation unit generates the display image by switching the display viewpoint to the first-person view.

17. The signal processing device according to claim 16, wherein

the first-person view is a computer graphics image generated based on 3D map information, and
in a case where the delay time is shorter than the second predetermined time, when the 3D map information has been acquired, the display image creation unit generates the display image by switching the display viewpoint to the first-person view, whereas when the 3D map information has not been acquired, the display image creation unit generates the display image by switching the display viewpoint to the third-person view.

18. The signal processing device according to claim 16, wherein

the bird's-eye view includes an illustrated bird's-eye view and a camera image bird's-eye view,
when the delay time is longer than the first predetermined time and longer than a third predetermined time, the display image creation unit generates the display image by switching the display viewpoint to the illustrated bird's-eye view, and
when the delay time is shorter than the third predetermined time and longer than the first predetermined time, the display image creation unit generates the display image by switching the display viewpoint to the camera image bird's-eye view.

19. A signal processing method comprising predicting a current position of a surrounding object considering a delay time of a communication with a mobile body based on information on the surrounding object received through the communication, the surrounding object being an object that is present in a region around the mobile body.

20. A signal processing system comprising:

a signal processing device including:
a prediction unit configured to predict a current position of a surrounding object considering a delay time of a communication with a mobile body based on information on the surrounding object received through the communication, the surrounding object being an object that is present in a region around the mobile body, and
a display image creation unit configured to create a display image indicating information on the surrounding object based on the current position predicted; and
a display device including a display unit configured to display the display image.

# Fig.1

VL  CL

VC  CL

DELAY

VEHICLE SURROUNDINGS
INFORMATION

VEHICLE STEERING
INFORMATION

PC

PC

2

1

VF  CL

CF

PC

EP 4 752 861 A1

Fig. 2

# Fig.3

OPERATOR TERMINAL 32

CONTROL UNIT 51

71 — STEERING INFORMATION ACQUIRING UNIT

75 — DISPLAY IMAGE CREATION UNIT

72 — DELAY TIME ACQUIRING UNIT

76 — STEERING INFORMATION SUPPLY UNIT

73 — VEHICLE INFORMATION ACQUIRING UNIT

74 — CURRENT POSITION PREDICTION UNIT

58

52 — INPUT UNIT

53 — OUTPUT UNIT
81 — DISPLAY UNIT
82 — VOICE OUTPUT UNIT

54 — STORAGE UNIT
91 — PREDICTION METHOD STORAGE UNIT
92 — POSITION INFORMATION ACCUMULATION UNIT

55 — COMMUNICATION UNIT

56 — DRIVE

57 — REMOVABLE STORAGE MEDIUM

EP 4 752 861 A1

34

# Fig.4

| ID | TYPE | MEASUREMENT TIME | x | y | z | yaw |
|----|------|------------------|---|---|---|-----|
|    |      |                  |   |   |   |     |

# Fig.5

# Fig.6

| DISPLAY INFORMATION | | DISPLAY VIEWPOINT | | | |
|---|---|---|---|---|---|
| | | BIRD'S-EYE VIEW | THIRD-PERSON VIEW | FIRST-PERSON VIEW | REMARKS |
| DISPLAY INFORMATION | POSITION ONLY | | | | |
| | VEHICLE BODY ANGLE | | | | EFFECTIVE WHEN THERE ARE LANE CHANGES OR RIGHT/LEFT TURNS |
| | ROUTE | | | | |
| | REMARKS | LIGHT PROCESSING LOAD | | HEAVY PROCESSING LOAD 3D MAP INFORMATION REQUIRED IN ADVANCE | |

EP 4 752 861 A1

# Fig.7

| DISPLAY PREDICTED POSITION IN SUPERIMPOSED MANNER | DISPLAY AREA | | DISPLAY PREDICTED POSITION ONLY |
|---|---|---|---|
| (1-1) | (2-1) | (2-3) | (3-1) |
| (1-2) | (2-2) | (2-4) | (3-2) |

EP 4 752 861 A1

# Fig. 8

| DISPLAY VIEWPOINT | | |
|---|---|---|
| BIRD'S-EYE VIEW | THIRD-PERSON VIEW | FIRST-PERSON VIEW |

# Fig.9

| DISPLAY PREDICTED POSITION IN SUPERIMPOSED MANNER | DISPLAY AREA | DISPLAY PREDICTED POSITION ONLY |
|---|---|---|
| | | |

# Fig.10

VEHICLE
START REMOTE OPERATION CONTROL PROCESS

S31 SENSE REGION AROUND OWN VEHICLE

S32 ACQUIRE POSITION INFORMATION OF OWN VEHICLE

S33 ACQUIRE SPEED AND STEERING ANGLE

S33 GENERATE VEHICLE INFORMATION AND TRANSMIT IT TO OPERATOR TERMINAL

S35 ACQUIRE STEERING INFORMATION

S36 CONTROL VEHICLE BASED ON STEERING SIGNAL

S37 END?
No / Yes

END

OPERATOR TERMINAL
START REMOTE OPERATION CONTROL PROCESS

S51 RECEIVE VEHICLE INFORMATION

S52 MEASURE DELAY TIME

S53 OWN VEHICLE POSITION PREDICTION PROCESS

S54 OWN VEHICLE POSITION DISPLAY METHOD DETERMINATION PROCESS

S55 SURROUNDING OBJECT PREDICTION PROCESS

S56 SURROUNDING OBJECT DISPLAY METHOD DETERMINATION PROCESS

S57 DISPLAY OWN VEHICLE AND SURROUNDING OBJECT BY DETERMINED DISPLAY METHOD

S58 RECEIVE INPUT OF STEERING INFORMATION

S59 TRANSMIT STEERING INFORMATION

S60 END?
No / Yes

END

# Fig.11

```
┌─────────────────────────────┐
│  START OWN VEHICLE POSITION  │
│     PREDICTION PROCESS       │
└─────────────────────────────┘
              │
              ▼              S71
┌─────────────────────────────┐
│    ACQUIRE STEERING ANGLE S  │
└─────────────────────────────┘
              │
              ▼              S72
┌─────────────────────────────┐
│       ACQUIRE SPEED V        │
└─────────────────────────────┘
              │
              ▼              S73
┌─────────────────────────────┐
│     ACQUIRE DELAY TIME T     │
└─────────────────────────────┘
              │
              ▼              S74
┌─────────────────────────────┐
│ ACQUIRE POSITION INFORMATION $P_c$ │
└─────────────────────────────┘
              │
              ▼              S75
┌─────────────────────────────┐
│ PREDICT CURRENT POSITION $P_P = P_C + f(S, V, T)$ │
└─────────────────────────────┘
              │
              ▼
        ┌──────────┐
        │  RETURN  │
        └──────────┘
```

# Fig.12

LATERAL POSITION X
(CURRENT)

LATERAL POSITION X'
(PREDICTION)

$P_p(X',Z')$

DEPTH Z'
(PREDICTION)

TURNING
RADIUS
R AT
STEERING
ANGLE S

YAW RATE ω
(RATE OF CHANGE IN RAD
PER SECOND)

θ

$P_c(X,Z)$

DEPTH Z
(CURRENT)

# F i g . 13

```
┌─────────────────────────────────────────┐
│   START OWN VEHICLE POSITION DISPLAY     │
│     METHOD DETERMINATION PROCESS         │
└─────────────────────────────────────────┘
                    │
                    ▼              S91
┌─────────────────────────────────────────┐
│  │  DISPLAY VIEWPOINT DETERMINATION  │   │
│  │            PROCESS                │   │
└─────────────────────────────────────────┘
                    │
                    ▼              S92
┌─────────────────────────────────────────┐
│  │ DISPLAY INFORMATION DETERMINATION │   │
│  │            PROCESS                │   │
└─────────────────────────────────────────┘
                    │
                    ▼
          ┌───────────────────┐
          │      RETURN        │
          └───────────────────┘
```

# Fig.14

# Fig.15

START DISPLAY INFORMATION
DETERMINATION PROCESS

S131
IS NUMBER OF SURROUNDING VEHICLES EQUAL
TO OR SMALLER THAN PREDETERMINED NUMBER? → No

Yes

S133
STRAIGHT ROAD? → No

Yes

S132
ROUTE

S134
POSITION ONLY

S135
VEHICLE BODY ANGLE

RETURN

EP 4 752 861 A1

# Fig.16

START SURROUNDING OBJECT PREDICTION PROCESS

S151
ACQUIRE DELAY TIME T

S152
ACQUIRE POSITION INFORMATION OF OWN VEHICLE

S153
ACQUIRE SENSING RESULT

S154
RECOGNIZE SURROUNDING OBJECT BASED ON SENSING RESULT

S155
SET UNPROCESSED SURROUNDING OBJECT TO PROCESSING TARGET OBJECT

S156
IS POSITION INFORMATION FOR N FRAMES ACCUMULATED? — No

Yes

S157
ACQUIRE POSITION INFORMATION OF PROCESSING TARGET OBJECT BASED ON POSITION INFORMATION FOR N FRAMES

S158
BASED ON POSITION INFORMATION FOR N FRAMES, SPEED, AND DELAY TIME, PREDICT CURRENT POSITION OF PROCESSING TARGET OBJECT

S159
UPDATE AND ACCUMULATE POSITION INFORMATION OF PROCESSING TARGET OBJECT

S160
IS THERE UNPROCESSED SURROUNDING OBJECT? — Yes

No

RETURN

# Fig. 17

START SURROUNDING OBJECT DISPLAY
METHOD DETERMINATION PROCESS

S171

IS DELAY TIME T M1 OR GREATER? — No

Yes

S173

IS DELAY TIME T M2 (< M1) OR
GREATER? — No

Yes

S172

DISPLAY PREDICTED
POSITION ONLY

S174

DISPLAY AREA

S175

DISPLAY PREDICTED POSITION
IN SUPERIMPOSED MANNER

RETURN

EP 4 752 861 A1

# Fig.18

BV1

BV2

# Fig. 19

EP 4 752 861 A1

```
        ┌──────────────────────────┐
        │  START DISPLAY VIEWPOINT │
        │  DETERMINATION PROCESS   │
        └──────────────────────────┘
                     │
                     │                    S191
        ╱─────────────────────────╲   No
       ⟨  IS DELAY TIME T N0 (> N1) OR ⟩─────────┐
        ╲        GREATER?          ╱             │
                     │ Yes                        │
                     │                            │                S193
                     │               ╱─────────────────────────╲  No
                     │              ⟨  IS DELAY TIME T N1 (< N0) OR ⟩───────┐
                     │               ╲        GREATER?          ╱           │
                     │                          │ Yes                       │
                     │                          │                           │                 S195
                     │                          │              ╱─────────────────────────╲  No
                     │                          │             ⟨  IS DELAY TIME T N2 (< N1) OR ⟩──────┐
                     │                          │              ╲        GREATER?          ╱          │
                     │                          │                         │ Yes                      │
                     │                          │                         │                          │             S197
                     │                          │                         │            No  ╱──────────────────────────╲
                     │                          │                         │         ┌─────⟨ IS THERE 3D MAP INFORMATION? ⟩
                     │                          │                         │         │      ╲                          ╱
                     │                          │                         │         │                 │ Yes
                     │          S192            │        S194             │  S196   │                 │         S198
        ┌──────────────────────┐   ┌──────────────────────┐   ┌──────────────────┐     ┌──────────────────┐
        │ ILLUSTRATED BIRD'S-EYE│   │ CAMERA IMAGE BIRD'S-EYE│  │ THIRD-PERSON VIEW │     │ FIRST-PERSON VIEW │
        │        VIEW           │   │        VIEW           │   │                  │     │                  │
        └──────────────────────┘   └──────────────────────┘   └──────────────────┘     └──────────────────┘
                     │                          │                         │                          │
                     │                          └─────────────────────────┴──────────────────────────┘
                     │
        ┌──────────────────────┐
        │       RETURN         │
        └──────────────────────┘
```

# Fig.20

WV1

(1) WARN TO STOP
USING TEXT

COMMUNICATION DELAY
HAS OCCURRED. STOP

WT

WV2

(2) INDICATE DEGREE OF
DELAY USING COLOR

WC

WV3

(3) ENCOURAGE SPEED REDUCTION
BY REDUCING VISIBILITY

# Fig.21

START SURROUNDING OBJECT DISPLAY
METHOD DETERMINATION PROCESS

S211
IS DELAY TIME T M0 (> M1) OR GREATER? —No

Yes

S213
IS DELAY TIME T M1 (< M0) OR GREATER? —No

Yes

S215
IS DELAY TIME T M2 (< M1) OR GREATER? —No

Yes

S212
WARNING DISPLAY

S214
DISPLAY PREDICTED POSITION ONLY

S216
DISPLAY AREA

S217
DISPLAY PREDICTED POSITION IN SUPERIMPOSED MANNER

RETURN

EP 4 752 861 A1

# Fig. 22

START SURROUNDING OBJECT DISPLAY
METHOD DETERMINATION PROCESS

S231

IS DELAY TIME T M1 OR GREATER? — No

Yes

S233

IS NUMBER OF SURROUNDING VEHICLES
LESS THAN PREDETERMINED NUMBER? — No

Yes

S232
DISPLAY PREDICTED
POSITION ONLY

S234
DISPLAY AREA

S235
DISPLAY PREDICTED POSITION
IN SUPERIMPOSED MANNER

RETURN

# Fig.23

WV11

SG
WL

(1) INDICATE SPEED, SIGNAL, ETC. USING
LETTERS AND MARKS

WV12

(1) INDICATE SPEED USING COLOR
DENSITY AND SIZE

WS

# Fig. 24

| RISK LEVEL | TYPE |
|---|---|
| 10 | CHILDREN/ELDERLY PERSONS |
| 9 | PEDESTRIANS |
| 8 | BICYCLES |
| 7 | MOTORCYCLES |
| 6 | LIGHT VEHICLES |
| 5 | PASSENGER VEHICLES |
| 4 | TRUCKS |

| RISK LEVEL | BEHAVIOR |
|---|---|
| HIGH | NARROW DISTANCE FROM ANOTHER VEHICLE |
| HIGH | LANE CHANGE WITHOUT SIGNALING |
| MEDIUM | FREQUENT LANE CHANGE |
| MEDIUM | SUDDEN OR HIGH-SPEED ACCELERATION/DECELERATION |

# Fig. 25

OFSOFF

OFSON

MB   Pb   Pc   MC

MB'   Pb → Pb'   Pc   MC
      Da

EP 4 752 861 A1

# Fig.26

| PARAMETER | COLOR | RESOLUTION | BORDER | OUTLINE | AREA |
|---|---|---|---|---|---|
| CHANGING METHOD | DARKER COLORS FOR HIGHER RISK LEVELS | LOWER RESOLUTION OF OBJECT OF LOW RISK LEVEL | ENCLOSE OBJECT OF HIGH RISK LEVEL WITHIN BORDER | EMPHASIZE OUTLINE OF OBJECT OF HIGH RISK LEVEL | PROVIDE AREA DISPLAY SUCH THAT HIGHER RISK LEVELS ARE WIDER |
| VEHICLE BODY ANGLE | | | | | |

MB1　MC1
WV31

MB2　MC2
WV32

MB3　MC3
WV33

MB4　MC4
WV34

MB5　MC5
WV35

Fig. 27

EP 4 752 861 A1

# Fig. 28

| SURROUNDING VEHICLE | OWN VEHICLE | OPERATOR TERMINAL |
|---|---|---|

**SURROUNDING VEHICLE**

START REMOTE OPERATION CONTROL PROCESS (V2V)

S251 — SENSE REGION AROUND OWN VEHICLE

S252 — ACQUIRE POSITION INFORMATION OF OWN VEHICLE

S253 — ACQUIRE SPEED AND STEERING ANGLE

S254 — GENERATE AND TRANSMIT VEHICLE INFORMATION

S255 — ACQUIRE STEERING INFORMATION

S256 — CONTROL VEHICLE BASED ON STEERING SIGNAL

S257 — END? No / Yes

END

**OWN VEHICLE**

START REMOTE OPERATION CONTROL PROCESS (V2V)

S271 — SENSE REGION AROUND OWN VEHICLE

S272 — ACQUIRE POSITION INFORMATION OF OWN VEHICLE

S273 — ACQUIRE SPEED AND STEERING ANGLE

S274 — GENERATE VEHICLE INFORMATION OF OWN VEHICLE

S275 — RECEIVE VEHICLE INFORMATION OF SURROUNDING VEHICLE

S276 — TRANSMIT VEHICLE INFORMATION OF SURROUNDING VEHICLE AND OWN VEHICLE

S277 — ACQUIRE STEERING INFORMATION

S278 — CONTROL VEHICLE BASED ON STEERING SIGNAL

S279 — END? No / Yes

END

**OPERATOR TERMINAL**

START REMOTE OPERATION CONTROL PROCESS (V2V)

S291 — RECEIVE VEHICLE INFORMATION OF A PLURALITY OF VEHICLES

S292 — MEASURE DELAY TIME WITH RESPECT TO EACH VEHICLE

S293 — OWN VEHICLE POSITION PREDICTION PROCESS

S294 — OWN VEHICLE POSITION DISPLAY METHOD DETERMINATION PROCESS

S295 — SURROUNDING OBJECT PREDICTION PROCESS

S296 — SURROUNDING OBJECT DISPLAY METHOD DETERMINATION PROCESS

S297 — DISPLAY OWN VEHICLE AND SURROUNDING OBJECT BY DETERMINED DISPLAY METHOD

S298 — RECEIVE INPUT OF STEERING INFORMATION

S299 — TRANSMIT STEERING INFORMATION

S300 — END? No / Yes

END

59

# Fig. 29

EP 4 752 861 A1

# Fig.30

| VEHICLE | TRAFFIC INFORMATION CLOUD SERVER | OPERATOR TERMINAL |
|---|---|---|
| START REMOTE OPERATION CONTROL PROCESS (V2X) | START REMOTE OPERATION CONTROL PROCESS (V2X) | START REMOTE OPERATION CONTROL PROCESS (V2X) |

**VEHICLE**

S311
SENSE REGION AROUND OWN VEHICLE

S312
ACQUIRE POSITION INFORMATION OF OWN VEHICLE

S313
ACQUIRE SPEED AND STEERING ANGLE

S314
GENERATE AND TRANSMIT VEHICLE INFORMATION

S315
ACQUIRE STEERING INFORMATION

S316
CONTROL VEHICLE BASED ON STEERING SIGNAL

S317
END? —No

Yes
END

**TRAFFIC INFORMATION CLOUD SERVER**

S331
RECEIVE VEHICLE INFORMATION FROM VEHICLE AND STORE IT IN ASSOCIATED MANNER FOR EACH VEHICLE

S332
RECEIVE ON-ROAD FACILITY INFORMATION FROM ON-ROAD COMMUNICATION EQUIPMENT

S333
TRANSMIT VEHICLE INFORMATION OF A PLURALITY OF VEHICLES

S334
END? No

Yes
END

**OPERATOR TERMINAL**

S351
RECEIVE VEHICLE INFORMATION OF A PLURALITY OF VEHICLES

S352
MEASURE DELAY TIME WITH RESPECT TO EACH VEHICLE

S353
OWN VEHICLE POSITION PREDICTION PROCESS

S354
OWN VEHICLE POSITION DISPLAY METHOD DETERMINATION PROCESS

S355
SURROUNDING OBJECT PREDICTION PROCESS

S356
SURROUNDING OBJECT DISPLAY METHOD DETERMINATION PROCESS

S357
DISPLAY OWN VEHICLE AND SURROUNDING OBJECT BY DETERMINED DISPLAY METHOD

S358
RECEIVE INPUT OF STEERING INFORMATION

S359
TRANSMIT STEERING INFORMATION

S360
END? No

Yes
END

# F i g . 3 1

WV51

SIGNAL WILL TURN RED IN 4 [s]
START DECELERATION

WV52

VEHICLE IN INTERSECTION
START DECELERATION

EP 4 752 861 A1

Fig. 32

# Fig. 33

EP 4 752 861 A1

## INTERNATIONAL SEARCH REPORT

| International application No. |
|---|
| **PCT/JP2024/024709** |

| A. | CLASSIFICATION OF SUBJECT MATTER |
|---|---|

*G08G 1/00*(2006.01)i; *G05D 1/00*(2024.01)i; *G08G 1/09*(2006.01)i; *H04Q 9/00*(2006.01)i
FI:   G08G1/00 A; G08G1/09 F; G05D1/00; H04Q9/00 301B

According to International Patent Classification (IPC) or to both national classification and IPC

| B. | FIELDS SEARCHED |
|---|---|

Minimum documentation searched (classification system followed by classification symbols)

G08G1/00-99/00; B60W30/00-60/00; G05D1/00-1/87; H03J9/00-9/06; H04Q9/00-9/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-167551 A (HONDA MOTOR CO., LTD.) 08 October 2020 (2020-10-08) paragraphs [0050]-[0055], [0058]-[0063], [0065]-[0068], fig. 8-11 | 1-5, 19-20 |
| Y | | 14-15 |
| A | | 6-13, 16-18 |
| Y | WO 2018/155159 A1 (PANASONIC INTELLECTUAL PROPERTY MANAGEMENT CO., LTD.) 30 August 2018 (2018-08-30) paragraphs [0058]-[0059], [0101], [0115], [0121], [0140], fig. 6, 18, 21, 23 | 14-15 |
| A | | 1-13, 16-20 |
| A | EP 3702864 A1 (REE TECHNOLOGY GMBH) 02 September 2020 (2020-09-02) paragraph [0053], fig. 1, 5 | 6-13 |
| A | WO 2022/208675 A1 (MITSUBISHI ELECTRIC CORPORATION) 06 October 2022 (2022-10-06) paragraph [0079], fig. 12 | 6-13 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 September 2024** | **01 October 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT

International application No.

**PCT/JP2024/024709**

### C.    DOCUMENTS CONSIDERED TO BE RELEVANT

| Category* | Citation of document, with indication, where appropriate, of the relevant passages | Relevant to claim No. |
|---|---|---|
| A | WO 2021/002116 A1 (SONY CORPORATION) 07 January 2021 (2021-01-07) paragraphs [0040], [0222]-[0223], fig. 1, 5, 21 | 16-18 |
| A | JP 2018-106676 A (PANASONIC INTELLECTUAL PROPERTY CORPORATION OF AMERICA) 05 July 2018 (2018-07-05) paragraphs [0107], [0111], fig. 1, 4 | 1-20 |

Form PCT/ISA/210 (second sheet) (July 2022)

**INTERNATIONAL SEARCH REPORT**
Information on patent family members

International application No.

**PCT/JP2024/024709**

| Patent document cited in search report | | | Publication date (day/month/year) | Patent family member(s) | | | Publication date (day/month/year) |
|---|---|---|---|---|---|---|---|
| JP | 2020-167551 | A | 08 October 2020 | US | 2020/0310416 | A1 | |
| | | | | paragraphs [0060]-[0065], [0068]-[0073], [0075]-[0078], fig. 8-11 | | | |
| | | | | CN | 111752267 | A | |
| WO | 2018/155159 | A1 | 30 August 2018 | US | 2019/0361436 | A1 | |
| | | | | paragraphs [0105]-[0106], [0148], [0162], [0168], [0187], fig. 6, 18, 21, 23 | | | |
| EP | 3702864 | A1 | 02 September 2020 | (Family: none) | | | |
| WO | 2022/208675 | A1 | 06 October 2022 | US | 2023/0386340 | A1 | |
| | | | | paragraphs [0200]-[0203], fig. 12 | | | |
| | | | | JP | 6956932 | B1 | |
| WO | 2021/002116 | A1 | 07 January 2021 | US | 2022/0244726 | A1 | |
| | | | | paragraphs [0101], [0304]-[0306], fig. 1, 5, 21 | | | |
| | | | | CN | 114073074 | A | |
| JP | 2018-106676 | A | 05 July 2018 | US | 2018/0181118 | A1 | |
| | | | | paragraphs [0120], [0124], fig. 1, 4 | | | |
| | | | | EP | 3339999 | A2 | |
| | | | | CN | 108227703 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010061346 A